(19) Europäisches Patentamt / European Patent Office / Office européen des brevets

(11) **EP 3 480 873 A1**

(12) **EUROPEAN PATENT APPLICATION**
published in accordance with Art. 153(4) EPC

(43) Date of publication:
**08.05.2019 Bulletin 2019/19**

(21) Application number: **17820283.4**

(22) Date of filing: **29.06.2017**

(51) Int Cl.:
*H01M 4/485* (2010.01)    *C01G 23/00* (2006.01)
*H01G 11/06* (2013.01)    *H01G 11/50* (2013.01)
*H01M 10/0525* (2010.01)    *H01M 10/0568* (2010.01)
*H01M 10/0569* (2010.01)

(86) International application number:
**PCT/JP2017/023986**

(87) International publication number:
**WO 2018/003929 (04.01.2018 Gazette 2018/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2016 JP 2016130934**
**22.11.2016 JP 2016226500**

(71) Applicant: **UBE Industries, Ltd.**
**Ube-shi, Yamaguchi 755-8633 (JP)**

(72) Inventors:
- **FUJINO, Hiroshi**
  **Ube-shi**
  **Yamaguchi 755-8633 (JP)**
- **TAKEMOTO, Hirofumi**
  **Ube-shi**
  **Yamaguchi 755-8633 (JP)**
- **MIYOSHI, Kazuhiro**
  **Ube-shi**
  **Yamaguchi 755-8633 (JP)**
- **HASHIMOTO, Chisen**
  **Ube-shi**
  **Yamaguchi 755-8633 (JP)**

(74) Representative: **Gille Hrabal**
**Brucknerstrasse 20**
**40593 Düsseldorf (DE)**

(54) **LITHIUM TITANATE POWDER AND ACTIVE MATERIAL FOR POWER STORAGE DEVICE ELECTRODE, AND ELECTRODE SHEET AND POWER STORAGE DEVICE USING SAME**

(57) An object of the present invention is to provide a lithium titanate powder and an active material which, in the case of being applied as an electrode material of an energy storage device, can suppress the gas generation at high temperatures and the capacity reduction in high-temperature charge and discharge cycles and besides can also suppress the resistance rise in the high-temperature charge and discharge cycles, an electrode sheet, of an energy storage device, containing these, and an energy storage device using the electrode sheet. The lithium titanate powder contains $Li_4Ti_5O_{12}$ as a main component, wherein the powder contains secondary particles being aggregates of primary particles composed of lithium titanate, and has a $D_{BET}$ of 0.03 $\mu m$ or more and 0.6 $\mu m$ or less and a D50 of 3 $\mu m$ or more and 40 $\mu m$ or less where the $D_{BET}$ represents a specific surface area-equivalent diameter calculated from a specific surface area determined by a BET method, and the D50 represents a median particle diameter in volume, a ratio $D50/D_{BET}$ ($\mu m/\mu m$) of D50 to $D_{BET}$ of 20 or more and 350 or less, a moisture amount (25°C to 350°C) of 600 ppm or less as measured by Karl Fischer's method, and an average 10%-compressive strength of the secondary particles of 0.1 MPa or more and 3 MPa or less.

**EP 3 480 873 A1**

**Description**

Technical Field

The present invention relates to a lithium titanate powder preferable as an electrode material of an energy storage device, and the like, an active material using the lithium titanate powder, and an energy storage device using the active material for a positive electrode sheet or negative electrode sheet.

Background Art

Recently, various types of materials have been studied as electrode materials for energy storage devices. Among them, lithium titanate is, from the viewpoint of being excellent in the input-output performance in the case of use thereof as an active material, attracting attention as an active material of an energy storage device for electric vehicles such as HEV, PHEV, and BEV.

Since it is not seldom that in summertime, the interior temperature of cars exceeds 60°C, it is demanded for energy storage devices for electric vehicles that there is no problem in safety and the performance does not lower, even at high temperatures. When energy storage devices containing lithium titanate are operated at such high temperatures, however, a reaction of lithium titanate with an electrolytic solution is liable to proceed, thus generates gas to swell the energy storage devices and raise a problem in safety of the energy storage devices. Further at high temperatures, such problems are raised that the capacity reduction becomes large and the resistance rise becomes large, in the case where charge and discharge is repeated. Therefore, there is desired development of lithium titanate suppressed in the gas generation, the capacity reduction and the resistance rise in the high-temperature operation of an energy storage device.

Patent Document 1 discloses a lithium titanium composite oxide in which when the composite oxide is heated from 60°C to 900°C in pyrolysis gas chromatographic mass spectroscopy, the total amount of moisture generated in the measurement is 1,500 ppm by weight or less and the total amount of carbon dioxide generated is 2,000 ppm by weight or less. Then it is contended that the lithium titanium composite oxide, even when its specific surface area is made large, can suppress increases in the amount of gas adsorbed and the amount of a solvent for preparing a coating liquid, and can contribute to enhancement of the safety of a lithium ion secondary battery.

On the other hand, it is contended, from the viewpoint of homogeneous electrode formation, that a lithium titanate powder is preferable which is synthesized by being calcined after being granulated and has specific powder physical properties. For example, Patent Document 2 discloses a lithium titanium composite oxide characterized in that primary particles are aggregated to form globular secondary particles of 1 to 50 $\mu$m in particle diameter; the specific surface area is 0.5 to 10 m$^2$/g; and the main component is composed of $Li_{4/3}Ti_{5/3}O_4$. It is contended that handling and applicability on a current collector are good; a nonaqueous electrolyte secondary battery using the composite oxide has a high initial discharge capacity; and the capacity deviation width in repeated usage thereof is small.

For example, Patent Document 3 discloses a granulated material of lithium titanate which has a degree of milling Zd (D50 before milling/D50 after milling) of 2 or more as measured when a load of 35 MPa is applied for 1 min on 1 g of a sample. It is contended that the lithium titanate granulated material is easily micropowderized by milling before mixing of a coating slurry or by milling during the mixing, making dispersing easy and making binding with a current collector firm.

Further Patent Document 4 discloses an agglomerated globular lithium composite oxide formed through much agglomeration of micropowder of a specific lithium nickel-cobaltate, wherein the agglomerated globular lithium composite oxide is characterized in having an angle of repose of 45 to 65° and a compressive breaking strength per one particle of 0.1 to 1.0 gf.

Further Patent Document 5 discloses an active material for a battery, which contains secondary particles and a carbon material phase formed on at least a part of the surface of the secondary particles, the secondary particles being agglomerates of primary particles of an active substance, which primary particles contain a specific niobium composite oxide, and having a compressive breaking strength of 10 MPa or more.

Prior Art Document

Patent Document

Patent Document 1: JP 2014-1110 A
Patent Document 2: JP 2001-192208 A
Patent Document 3: WO 2014/196462

Patent Document 4: JP 2001-80920 A
Patent Document 5: JP 2015-88467 A

Summary of Invention

Problems to be solved by Invention

The lithium titanate powder of Patent Document 1 in which the moisture amount is suppressed, though the suppression of the moisture amount can lead to suppression of gas generation at high temperatures as compared with a lithium titanate powder having a much moisture amount, is not always sufficient in suppression of gas generation at high temperatures and besides cannot suppress the capacity reduction and the resistance rise in high-temperature charge and discharge cycles. Then the lithium titanate powder of Patent Document 2, though being good in handling in the electrode manufacture as compared with a lithium titanate powder produced by having been subjected to no granulation step, becomes low in the electrode density and low in the capacity per electrode volume and besides cannot suppress any of the gas generation, the capacity reduction and the resistance rise. Further the lithium titanate powder of Patent Document 3, though being good in the dispersibility to a binder as compared with a lithium titanate powder produced by being calcined at a high temperature after granulation, cannot suppress any of the gas generation, the capacity reduction and the resistance rise as in the lithium titanate powder of Patent Document 2.

Further Patent Document 4 discloses the point that the compressive strength of the lithium nickel-cobaltate is made to be 0.1 to 1.0 gf (7.7 to 77 MPa). Patent Document 4 discloses the point that the compressive strength when the lithium nickel-cobaltate particle is broken, that is, the compressive breaking strength is made in the above range. Then, Patent Document 4 discloses only that by making the compressive breaking strength in the above range, the agglomerated particle is broken by a slight pressure to become a micropowder; the micropowder is thereby enabled to be distributed uniformly on the positive electrode; and the initial discharge capacity and the capacity retention rate of the discharge capacity are thereby enabled to be made high, and does not at all show any finding on the gas generation at high temperatures and the suppression of the capacity reduction in high-temperature charge and discharge cycles.

Further Patent Document 5 discloses a secondary particle made by agglomeration of primary particles of a niobium composite oxide and the secondary particle having a compressive breaking strength of 10 MPa or more. This Patent Document 5 discloses that when the compressive breaking strength, which is a strength when a second particle collapses, is less than 10 MPa, the secondary particle collapses during dispersing to decrease the bindability of the electrode and remarkably decrease the electronic conductivity, whereas by making the compressive breaking strength to be 10 MPa or more, the particle collapse during dispersing is enabled to be much suppressed, making the electronic conduction path to be hardly collapsed and thereby enabling a good charge and discharge life performance to be accomplished. Patent Document 5, however, does not at all disclose any finding on suppression of the capacity reduction in high-temperature charge and discharge cycles.

Then, an object of the present invention is to provide a lithium titanate powder and an active material which, in the case of being applied as an electrode material of an energy storage device, can suppress the gas generation at high temperatures and the capacity reduction in high-temperature charge and discharge cycles and besides can suppress the resistance rise in the high-temperature charge and discharge cycles, an electrode sheet, of an energy storage device, containing these, and an energy storage device using the electrode sheet.

Means for solving problems

As a result of intensive studies to achieve the above-mentioned object, the present inventors have found a lithium titanate powder containing secondary particles being aggregates of primary particles, wherein the lithium titanate powder has a specific degree of aggregation, a small amount of moisture released under a specific temperature condition and an average 10%-compressive strength of the contained secondary particles in a specific range, and have found that in an energy storage device to which the lithium titanate powder is applied as its electrode material, the gas generation at high temperatures is little and besides, the capacity reduction and the resistance rise in high-temperature charge and discharge cycles are small, and these findings have led to the completion of the present invention. That is, the present invention relates to the following items.

(1) A lithium titanate powder for an electrode of an energy storage device, comprising $Li_4Ti_5O_{12}$ as a main component, wherein the lithium titanate powder comprises secondary particles being aggregates of primary particles composed of lithium titanate, and has a $D_{BET}$ of 0.03 $\mu$m or more and 0.6 $\mu$m or less and a D50 of 3 $\mu$m or more and 40 $\mu$m or less where the $D_{BET}$ represents a specific surface area-equivalent diameter calculated from a specific surface area determined by a BET method, and D50 represents a median particle diameter in volume, a ratio D50/$D_{BET}$ ($\mu$m/$\mu$m) of D50 to $D_{BET}$ of 20 or more and 350 or less, a moisture amount (25°C to 350°C) of 600 ppm or less as measured by Karl Fischer's method, and an average 10%-compressive strength of the secondary particles of 0.1 MPa or more and 3 MPa or less.

(2) The lithium titanate powder for an electrode of an energy storage device according to (1), wherein the lithium titanate powder has no detected compressive breaking strength.

(3) The lithium titanate powder for an electrode of an energy storage device according to (1) or (2), wherein the lithium titanate powder has a moisture amount (200°C to 350°C) of 150 ppm or less as measured by Karl Fischer's method.

(4) The lithium titanate powder for an electrode of an energy storage device according to any one of (1) to (3), wherein the lithium titanate powder has a $D_{max}$ of 53 $\mu$m or less where the $D_{max}$ represents a maximum particle diameter in volume.

(5) The lithium titanate powder for an electrode of an energy storage device according to any one of (1) to (4), wherein the secondary particles have an average degree of circularity of 90% or more.

(6) The lithium titanate powder for an electrode of an energy storage device according to any one of (1) to (5), wherein the secondary particles have an average 10%-compressive strength of 0.1 MPa or more and 1 MPa or less.

(7) An active material, comprising the lithium titanate powder for an electrode of an energy storage device according to any one of (1) to (6).

(8) An electrode sheet for an energy storage device, manufactured by using the active material according to (7).

(9) An energy storage device, comprising the electrode sheet according to (8).

(10) A lithium ion secondary battery, manufactured by using the active material according to (7).

(11) A hybrid capacitor, manufactured by using the active material according to (7).

(12) The energy storage device according to (9), wherein a nonaqueous electrolytic solution where an electrolyte salt including at least one lithium salt selected from $LiPF_6$, $LiBF_4$, $LiPO_2F_2$ and $LiN(SO_2F)_2$ is dissolved in a nonaqueous solvent including one or more cyclic carbonates selected from ethylene carbonate, propylene carbonate, 1,2-butylene carbonate, 2,3-butylene carbonate, 4-fluoro-1,3-dioxolan-2-one and 4-ethynyl-1,3-dioxolan-2-one is used.

(13) The energy storage device according to (12), wherein the nonaqueous electrolytic solution has a total concentration of the electrolyte salt of 0.5 M or more and 2.0 M or less, includes at least $LiPF_6$ as the electrolyte salt, and further includes at least one selected from $LiBF_4$, $LiPO_2F_2$ and $LiN(SO_2F)_2$ within a range of 0.001 M or more and 1.0 M or less.

(14) The energy storage device according to (12) or (13), wherein the nonaqueous electrolytic solution contains one or two or more symmetric chain carbonates selected from dimethyl carbonate, diethyl carbonate, dipropyl carbonate and dibutyl carbonate, and one or two or more asymmetric carbonates selected from methyl ethyl carbonate, methyl propyl carbonate, methyl isopropyl carbonate, methyl butyl carbonate and ethyl propyl carbonate.

Effect of Invention

The present invention can provide a lithium titanate powder and an active material suitable as an electrode material, for an energy storage device, small in the resistance rise and the capacity reduction and suppressed in the gas generation in the high-temperature charge and discharge cycles of the energy storage device, an electrode sheet, of an energy storage device, containing these, and an energy storage device using the electrode sheet.

Brief Description of Drawings

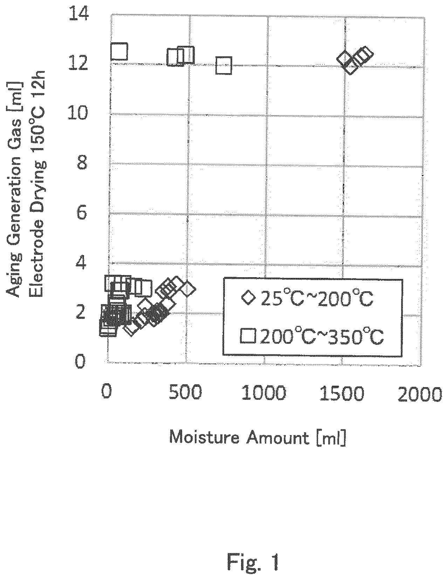

Fig. 1 is a graph indicating relations between the amounts of gas generated in an aging time of 800-mAh laminate batteries manufactured by making the vacuum drying condition of negative electrodes using lithium titanate powders according to Examples and Comparative Examples as their active substance to be at 80°C for 2 hours, and the moisture amounts (25°C to 200°C) and the moisture amounts (200°C to 350°C) measured as the lithium titanate powders.

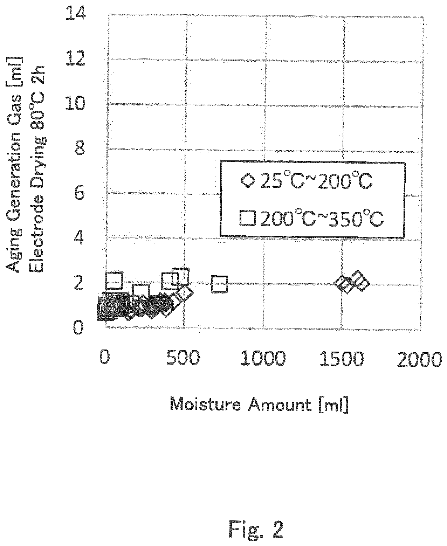

Fig. 2 is a graph indicating relations between the amounts of gas generated in an aging time of 800-mAh laminate batteries manufactured by making the vacuum drying condition of negative electrodes using lithium titanate powders according to Examples and Comparative Examples as their active substance to be at 150°C for 12 hours, and the moisture amounts (25°C to 200°C) and the moisture amounts (200°C to 350°C) measured as the lithium titanate powders.

Modes for Carrying out the Invention

[Lithium titanate powder of the present invention]

The lithium titanate powder of the present invention is a lithium titanate powder comprising $Li_4Ti_5O_{12}$ as a main component, wherein the lithium titanate powder comprises secondary particles being aggregates of primary particles composed of lithium titanate, and has a $D_{BET}$ of 0.03 μm. or more and 0.6 μm or less and a D50 of 3 μm or more and 40 μm or less where the $D_{BET}$ represents a specific surface area-equivalent diameter calculated from a specific surface area determined by a BET method, and D50 represents a median particle diameter in volume, a ratio $D50/D_{BET}$ (μm/μm) of D50 to $D_{BET}$ of 20 or more and 350 or less, a moisture amount (25°C to 350°C) of 600 ppm or less as measured by Karl Fischer's method, an average 10%-compressive strength of the secondary particles of 0.1 MPa or more and 3 MPa or less, and no detected compressive breaking strength.

<Lithium titanate powder containing $Li_4Ti_5O_{12}$ as a main component>

The lithium titanate powder of the present invention contains $Li_4Ti_5O_{12}$ as a main component, and can contain crystal components other than $Li_4Ti_5O_{12}$ and/or amorphous components in the range of being able to attain the advantageous effect of the present invention. In the lithium titanate powder of the present invention, it is preferable that among diffraction peaks measured by X-ray diffractometry, 90% or more be the proportion of the intensity of the main peak of $Li_4Ti_5O_{12}$ to the sum total of the intensity of the main peak of $Li_4Ti_5O_{12}$, the intensities of the main peaks caused by crystal components other than $Li_4Ti_5O_{12}$, and the maximum intensity of a halo pattern caused by amorphous components; and being 95% or more is more preferable. The lithium titanate powder of the present invention may sometimes contain, as the crystal components, anatase-type titanium dioxide, rutile-type titanium dioxide and $Li_2TiO_3$ being a lithium titanate having a different chemical formula, all caused by raw materials in the synthesis. Since the lithium titanate powder of the present invention having a lower proportion of these crystal components more improves the charge rate characteristic and the charge and discharge capacity of an energy storage device, it is especially preferable that among diffraction peaks measured by X-ray diffractometry, with the intensity of the main peak of $Li_4Ti_5O_{12}$ being taken to be 100, 5 or less be the sum total of the intensity of the main peak of the anatase-type titanium dioxide, the intensity of the main peak of the rutile-type titanium dioxide, and an intensity corresponding to the main peak of $Li_2TiO_3$, which is calculated by multiplying the peak intensity corresponding to the (-133) plane of $Li_2TiO_3$ by 100/80. Here, the main peak of $Li_4Ti_5O_{12}$ refers to a peak corresponding to a diffraction peak assigned to the (111) plane (2θ= 18.33) of $Li_4Ti_5O_{12}$ in the PDF card 00-049-0207 of ICDD (PDF2010). The main peak of the anatase-type titanium dioxide refers to a peak corresponding to a diffraction peak assigned to the (101) plane (2θ= 25.42) in the PDF card 01-070-6826. The main peak of the rutile-type titanium dioxide refers to a peak corresponding to a diffraction peak assigned to the (110) plane (2θ= 27.44) in the PDF card 01-070-7347. The peak corresponding to the (-133) plane of $Li_2TiO_3$ refers to a peak corresponding to a diffraction peak assigned to the (-133) plane (2θ= 43.58) of $Li_2TiO_3$ in the PDF card 00-033-0831; and the main peak of $Li_2TiO_3$ refers to a peak corresponding to the (002) plane. Here, "ICDD" is an abbreviation of International Centre for Diffraction Data; and "PDF" is an abbreviation of Powder Diffraction File.

<Secondary particles being aggregates of primary particles>

The lithium titanate powder of the present invention comprises secondary particles constituted of aggregated particles of primary particles composed of lithium titanate. Although the lithium titanate powder of the present invention comprises secondary particles constituted of aggregated particles of primary particles composed of lithium titanate, part thereof is allowed to take a form not forming secondary particles and a form of primary particles themselves.

<Specific surface area-equivalent diameter ($D_{BET}$)>

The specific surface area-equivalent diameter ($D_{BET}$), of the lithium titanate powder of the present invention, calculated from a specific surface area thereof determined by a BET method is 0.03 μm or more and 0.6 μm or less. The $D_{BET}$ of the lithium titanate powder of the present invention is an index relevant to the size of primary particles. A process of calculating $D_{BET}$ of the lithium titanate powder of the present invention will be described in Examples described later. $D_{BET}$ is, from the viewpoint of improving the charge and discharge rate characteristic, preferably 0.4 μm or less. $D_{BET}$ is, from the viewpoint of suppressing the gas generation from an energy storage device, preferably 0.1 μm or more.

<Median particle diameter in volume (D50)>

The median particle diameter in volume (D50) of the lithium titanate powder of the present invention is 3 μm

or more and 40 $\mu$m or less. The D50 of the lithium titanate powder of the present invention is an index relevant to the average particle diameter of secondary particles. Here, the D50 means a particle diameter at which the cumulative volume frequency determined by a laser diffraction scattering type size distribution measurement and calculated in terms of volume fraction becomes 50% in cumulation from the smaller particle diameter side. A method of measuring the D50 of the lithium titanate powder of the present invention will be described in Examples described later. The D50 is, from the viewpoint of making handling in a coating step or the like good, preferably 5 $\mu$m or more. The upper limit of the D50 is not especially limited, but is preferably 30 $\mu$m or less.

<D50/$D_{BET}$>

The ratio (D50/$D_{BET}$ ($\mu$m/$\mu$m)) of D50 to $D_{BET}$ of the lithium titanate powder of the present invention is 20 or more and 350 or less. The lithium titanate powder of the present invention comprises secondary particles being aggregates of primary particles composed of lithium titanate. The D50/$D_{BET}$ of the lithium titanate powder of the present invention is an index relevant to the degree of aggregation of primary particles to secondary particles. The lower limit of the D50/$D_{BET}$ is, from the viewpoint of ease of formation of the secondary particles, preferably 30 or more and more preferably 40 or more. The upper limit of the D50/$D_{BET}$ is, from the viewpoint of making easy the formation of an electrode mixture layer in which an active substance, a conductive agent and a binder are uniformly distributed, preferably 250 or less and more preferably 150 or less.

<Maximum particle diameter in volume ($D_{max}$)>

The maximum particle diameter in volume (maximum particle diameter, hereinafter, described as "$D_{max}$") of the lithium titanate powder of the present invention is preferably 53 $\mu$m or less. The $D_{max}$ is determined by a laser diffraction scattering-type size distribution measurement. Here, the $D_{max}$ means a particle diameter at which the cumulative volume frequency becomes 100% in cumulation from the smaller particle diameter side. A measurement method will be described in Examples described later. The $D_{max}$ is, from the viewpoint of making handling in a coating step good, more preferably 45 $\mu$m or less.

<Moisture amount>

The moisture amount (25°C to 350°C) of the lithium titanate powder of the present invention as measured by Karl Fischer's method refers to a total moisture amount of: a moisture amount acquired by measuring, by Karl Fischer's method, moisture released from the lithium titanate powder of the present invention during from the heating start until the completion of the heating holding at 200°C when the lithium titanate powder of the present invention is, in a nitrogen circulation, heated from 25°C to 200°C and held at 200°C for 1 hour; and a moisture amount acquired by consecutively measuring, by Karl Fischer's method, moisture released from the lithium titanate powder of the present invention during from the start of heating at 200°C until the completion of the heating holding at 350°C when the lithium titanate powder of the present invention is, in a nitrogen circulation, heated from 200°C to 350°C and held at 350°C for 1 hour. A method of the measurement will be described in detail in Paragraph [0124]<Measurement of the moisture amount by Karl Fischer's method>. The moisture amount (25°C to 350°C) of the lithium titanate powder of the present invention as measured by Karl Fischer's method, that is, the moisture amount of 25°C to 350°C is 600 ppm or less. When the moisture amount is 600 ppm or less, the lithium titanate powder of the present invention, in the case of being applied as an electrode material of an energy storage device, can make small the resistance rise and the capacity reduction, and the gas generation, in high-temperature charge and discharge cycles of the energy storage device. The moisture amount (25°C to 350°C) measured by Karl Fischer's method includes both of moisture physically adsorbed on the lithium titanate powder of the present invention and moisture chemically adsorbed thereon. In lithium titanate powder, the measurement in the region exceeding 350°C by Karl Fischer's method is usually difficult and almost no moisture is detected by another method (for example, pyrolysis gas chromatograph mass spectrometry). It is more preferable, from the viewpoint of suppressing the resistance rise, the capacity reduction and the gas generation in high-temperature charge and discharge cycles of an energy storage device, that the moisture amount (25°C to 350°C) measured by Karl Fischer's method be 500 ppm or less.

The moisture amount (200°C to 350°C) of the lithium titanate powder of the present invention as measured by Karl Fischer's method refers to, out of the moisture amount (25°C to 350°C), a moisture amount acquired by consecutively measuring, by Karl Fischer's method, moisture released from the lithium titanate powder of the present invention during from the start of heating at 200°C until the completion of the heating holding at 350°C. A method of the measurement will be described in detail in Paragraph [0124] <Measurement of the moisture amount by Karl Fischer's method> as in the measurement method of the moisture amount (25°C to 350°C). It is preferable that the moisture amount (200°C to 350°C) of the lithium titanate powder of the present invention as measured by Karl Fischer's method, that is, the moisture amount of 200°C to 350°C be 150 ppm or less. Moisture contained in the lithium titanate includes moisture physically adsorbed and moisture chemically adsorbed as described above, but it is presumed that probably most of both the moistures present on the surface are desorbed until 200°C, and is included in the moisture amount (25°C to 200°C) measured by Karl Fischer's method. Then since there is provided a step of drying the electrode in manufacture of a usual energy storage device, nearly most of the moisture amount (25°C to 200°C) measured by Karl Fischer's method results in being released in such a drying step (as in <Reference Experiment Example 1> described later). Hence, it is conceivable that moisture affecting an energy storage device is not moisture present on the particle surface of the lithium titanate but mainly moisture present in the particle interior, which is hardly removed in such a drying step. Therefore, it is conceivable that most of the moisture present in the particle interior and substantially affecting the energy storage device is included in a moisture amount (200°C to 350°C) measured by Karl Fischer's method. It is more preferable, from the above viewpoint, that the moisture amount (200°C to 350°C) measured by Karl Fischer's method be 100 ppm or less. The lower limit of the moisture amount (200°C to 350°C) measured by Karl Fischer's method is not especially limited, and there are also some cases of being below the detection limit of a measuring instrument (cases where the detected result can be judged to be substantially 0 ppm).

<Average 10%-compressive strength of secondary particles>

The lithium titanate powder of the present invention comprises, as described above, secondary particles constituted by aggregation of primary particles composed of lithium titanate, and the average 10%-compressive strength of such secondary particles is 0.1 MPa or more and 3 MPa or less. When the average 10%-compressive strength of secondary particles is 0.1 MPa or more, in the case where the lithium titanate powder is applied to an electrode material of an energy storage device, there can be made small the resistance rise and the capacity reduction in high-temperature charge and discharge cycles of the energy storage device. Here, making the average 10%-compressive strength of secondary particles to be 3 MPa or less is also effective on the density enhancement of an electrode mixture layer, that is, the energy density enhancement. The upper limit of the average 10%-compressive strength is, from the above viewpoint, more preferably 1 MPa or less. The average 10%-compressive strength of secondary particles is an average value of compressive strengths when particles being a measuring object are compressed by 10% of the particles. Specifically, each of a predetermined number of secondary particles contained in the lithium titanate powder of the present invention is subjected to a compressive measurement using a compression tester wherein a particle to be measured is compressed by 10% of the diameter of the particle; and an average value of the acquired 10%-compressive strengths of the predetermined number of secondary particles was calculated, and the average value of the acquired compressive strengths can be defined as an average 10%-compressive strength of the secondary particles constituting the lithium titanate powder of the present invention. A specific method of measuring the average 10%-compressive strength of secondary particles will be described in Examples described later.

In the present invention, the secondary particle is constituted by aggregation of a plurality of primary particles, but the average 10%-compressive strength (average value of the compressive strengths at the 10%-compression) of the secondary particle is one of indices indicating forms of such aggregation of primary particles, and indicates a magnitude of stress necessary for 10%-compression (a magnitude of stress necessary for making a predetermined deformation amount) and indicates a characteristic of the secondary particle itself. By contrast, the compressive breaking strength disclosed in Patent Literature 4 and Patent Literature 5 described above is a strength when the secondary particle itself collapses, and is an index indicating whether or not the shape of the secondary particle can be held under the strength; and such a compressive breaking strength is entirely different from the average 10%-compressive strength (average value of the compressive strengths at the 10%-compression) specified in the present invention, and usually does not correlate therewith.

Although the lithium titanate powder of the present invention having an average 10%-compressive strength in the above range can be subjected to compression itself exceeding 10%, since in the case where the compression load is being raised, the secondary particle follows the compression load and can be plastically deformed, collapsing of the secondary particle itself does not occur and the secondary particle exhibits substantially no compressive breaking strength.

<Average degree of circularity>

The lithium titanate powder of the present invention comprises secondary particles constituted by aggregation of primary particles composed of lithium titanate, as described above, but it is preferable that the average degree of circularity of the secondary particles contained is 90% or more. In the case where the average degree of circularity is 90% or more, when the lithium titanate powder is mixed with other electrode-constituting materials such as a conductive agent to make a coating material, dispersibility of the lithium titanate powder is good and a mixture layer having a good mixed degree with the conductive agent is easily formed, which case is therefore preferable. A method of measuring the average degree of circularity will be described in Examples described later. From the viewpoint of more enhancing the advantageous effect of the present invention, the average degree of circularity is preferably 93% or more and more preferably 95% or more. Then, although it is preferable that the lithium titanate powder of the present invention comprise secondary particles having a degree of circularity of 90% or more, the lithium titanate powder is allowed to contain lithium titanate powder particles other than the secondary particles having a degree of circularity of 90% or more (for example, secondary particles having a degree of circularity of less than 90% and primary particles not having been aggregated into secondary particles) and the like to the extent of not affecting the characteristic of an energy storage device to which the lithium titanate powder of the present invention is applied.

As seen in the present invention, when the moisture amount contained in the lithium titanate powder is small and the average 10%-compressive strength of secondary particles is in a specific range, there can be largely suppressed the resistance rise and the capacity reduction of an energy storage device in high-temperature charge and discharge cycles. By contrast, even when the moisture amount contained in the lithium titanate powder is small, when the lithium titanate powder is constituted substantially of primary particles or constituted of secondary particles having an average 10%-compressive strength less than the range of the present invention, there become large the resistance rise and the capacity reduction in high-temperature charge and discharge cycles. Further also when the lithium titanate powder is constituted of secondary particles having an average 10%-compressive strength higher than the range of the present invention, there become large the resistance rise and the capacity reduction in high-temperature charge and discharge cycles. Further even when the lithium titanate powder is constituted of secondary particles having an average 10%-compressive strength in the range of the present invention, when the moisture amount contained in the powder is large, the amount of gas generated of an energy storage device becomes large and there become large the resistance rise and the capacity reduction in high-temperature charge and discharge cycles.

The reason therefor is a matter of supposition, but is considered as follows. It is conceivable that a lithium titanate powder not having a predetermined degree of aggregation of the present invention (that is, the $D50/D_{BET}$ is not in a predetermined range of the present invention), or a lithium titanate powder having an average 10%-compressive strength of secondary particles lower than the present invention though having a predetermined degree of aggregation of the present invention, since being unable to form an electrode mixture layer in which an active substance, a conductive agent and a binder are uniformly distributed, cannot suppress the capacity reduction and the resistance rise in high-temperature charge and discharge cycles.

On the other hand, in a lithium titanate powder having a higher average 10%-compressive strength of secondary particles than the range of the present invention though having a predetermined degree of aggregation of the present invention, it is conceivable that since the secondary particle hardly deforms under a stress, in the case where in high-temperature charge and discharge cycles, gas is generated from surfaces of primary particles constituting the secondary particle, discharging passages are not secured and the discharged gas is not at once discharged from the secondary particle, making small a substantial reaction area between an active substance and an electrolytic solution. It is otherwise conceivable that gas having stayed until having a relatively large volume in the secondary particle interior is discharged at dash from the secondary particle, lowering the adhesiveness between a mixture layer and a current collector. It is conceivable that occurrence of such phenomena results in making it unable for the capacity reduction and the resistance rise in high-temperature charge and discharge cycles to be suppressed.

It is conceivable that just since the lithium titanate powder of the present invention which has a small moisture amount has a specific degree of aggregation and has the secondary particles having an average 10%-compressive strength in a specific range, there is formed an electrode mixture layer in which an active substance, a conductive agent and a binder are uniformly distributed; besides, the amount of gas generated itself is small in high-temperature charge and discharge cycles; and the gas discharged from surfaces of primary particles constituting the secondary particles does not stay in the vicinity and is little by little discharged from the secondary particles and the electrode mixture layer as well. It is presumed that thereby, the gas generation and the capacity reduction in high-temperature charge and discharge cycles are suppressed, and besides, the resistance rise in high-temperature charge and discharge cycles also be suppressed. By the way, such problems in the high-temperature environment are problems peculiar to lithium titanate, and the problems of the lithium titanate, which do not arise at room temperature, newly arise in the high-temperature environment; by contrast, the present invention is to effectively solve such problems. It can easily be understood by those skilled in the art, as is clear, for example, from disclosures by JP 2013-20909 A and the like, that, for example, even when the charge and discharge cycle characteristic at room temperature is good, the charge and discharge cycle characteristic at high temperatures does not always become good.

[Method for producing the lithium titanate powder of the present invention]

Hereinafter, one example of a method for producing the lithium titanate powder of the present invention will be described by being divided into a preparation step of raw materials, a calcination step and a post-treatment step, but the method for producing the lithium titanate powder of the present invention is not limited thereto.

<Preparation step of raw materials>

Raw materials of the lithium titanate powder of the present invention are composed of titanium raw material and lithium raw material. As the titanium raw material, there are used titanium compounds such as anatase-type titanium dioxide and rutile-type titanium dioxide. It is preferable that the titanium raw material easily react with the lithium raw material in a short time; and from this viewpoint, anatase-type titanium dioxide is preferable. For sufficient reaction of the raw materials by calcination in a short time, it is preferable that the median particle diameter in volume (average particle diameter, D50) of the titanium raw material be 2 $\mu$m or less.

As the lithium raw material, there is used a lithium compound such as lithium hydroxide monohydrate, lithium oxide, lithium hydrogencarbonate or lithium carbonate.

In the present invention, in the case where a mixture composed of the above raw materials is calcined in a short time, it is preferable that a mixed powder constituting the mixture be so regulated before the calcination that D95 in a size distribution curve of the mixed powder becomes 5 $\mu$m or less as measured by a laser diffraction scattering-type size distribution analyzer. Here, the D95 refers to a particle diameter at which the cumulative volume frequency calculated in terms of volume fraction becomes 95% in cumulation from the smaller particle diameter side.

For a method for preparing the mixture, the following methods can be adopted. A first method is one in which the raw materials are prepared and milled simultaneously with mixing. A second method is one in which each raw material is milled until its D95 after mixing becomes 5 $\mu$m or less and then mixed or mixed while being lightly milled. A third method is one in which a powder composed of microparticles is prepared by a method such as crystallization of each raw material, and the powders are, as required, classified, and mixed or mixed while being lightly milled. Among these, the first method in which milling is carried out simultaneously with mixing of the raw materials is, since being a method including a few steps, a method industrially advantageous. Further, a conductive agent may be added at the same time.

In any method of the first to third methods, a method of mixing the raw materials is not especially limited, and either method of wet mixing and dry mixing is allowed. There can be used, for example, a Henschel mixer, an ultrasonic disperser, a homo mixer, a mortar, a ball mill, a centrifugal ball mill, a planetary ball mill, a vibration ball mill, a high-speed ball mill such as an Atritor, a bead mill or a roll mill.

In the case where the obtained mixture is a mixed powder, it can be used as it is for the next calcination step. In the case where the obtained mixture is a mixed slurry composed of the mixed powder, it can be used for the next calcination process after being dried by a rotary evaporator or the like. In the case where the calcination is carried out by using a rotary kiln, the mixed slurry can be used as it is in the kiln.

<Calcination step>

Then, the obtained mixture is subjected to calcination. From the viewpoint of making the specific surface area of a powder to be obtained by calcination to be large and the crystallite diameter large, calcination at a high temperature and a short time is preferable. From such a viewpoint, the maximum temperature in calcination is preferably 1,000°C or less, more preferably 950°C or less, and still more preferably 900°C or less. From the viewpoint of reducing the proportion of specific impurity phases and also raising the crystallinity of lithium titanate, the maximum temperature in calcination is preferably 800°C or more and more preferably 810°C or more. Similarly from the above viewpoint, the holding time of the maximum temperature in calcination is preferably 2 to 60 minutes, more preferably 5 to 45 minutes, and still more preferably 5 to 30 minutes. When the maximum temperature in calcination is high, it is preferable to select a shorter holding time. Similarly from the viewpoint of making the crystallite diameter large, in a temperature-rise process in calcination, it is preferable to make the staying time at 700 to 800°C to be especially short, for example, 15 minutes or less.

The calcination method is not especially limited as long as being a method of being capable of calcination in the above conditions. Utilizable calcination methods include a fixed-bed furnace, a roller-hearth kiln, a mesh-belt kiln, a fluidized-bed furnace and a rotary kiln. However, to carry out efficient calcination in a short time, a roller-hearth kiln, a mesh-belt kiln or a rotary kiln is preferable. In the case where a roller-hearth kiln or mesh-belt kiln in which a mixture is accommodated in a sagger for calcination is used, it is preferable, in order to make the lithium titanate quality provided by securing uniformity of the temperature distribution of the mixture in calcination to be uniform, that the amount of the mixture accommodated in the sagger be made small.

The rotary kiln is an especially preferable calcining furnace for producing the lithium titanate powder of the present invention, in the point that no container accommodating the mixture is needed and the calcination can be carried out while the mixture is continuously charged, and in the point that the heat history to the material to be calcined is uniform and a uniform-quality lithium titanate can be obtained.

The calcination atmosphere is not especially limited regardless of calcining furnaces as long as being an atmosphere from which desorbed water and carbon dioxide can be removed. Usually, the atmosphere to be used is an air atmosphere using compressed air, but may also be an oxygen, nitrogen or hydrogen atmosphere, or the like.

<Post-treatment step>

Examples of a method of reducing the moisture amount contained in the lithium titanate powder and imparting an average 10%-compressive strength in a specific range to the secondary particles include the following post-treatment step.

That is, the lithium titanate powder after calcination obtained as described above, though having slight agglomeration, is allowed not to be so milled as to break particles; hence, the post-treatment suffices if deagglomeration and classification in such a degree as to loosen the agglomeration are carried out as needed. If only deagglomeration in such a degree as to loosen the agglomeration is carried out without milling being carried out, also thereafter, a high crystallinity of the lithium titanate powder after calcination is maintained.

Coating may be carried out on the lithium titanate powder of the present invention. As a material to be used for the coating may be any material, but an acidic organic or inorganic compound is preferable; specifically, preferable is acetic acid, oxalic acid, citric acid, aluminum acetate, aluminum fluoride, aluminum sulfate or the like.

In order to make the lithium titanate powder of the present invention into secondary particles being aggregates of primary particles, granulation may be carried out as the post-treatment step. The granulation may be by any method as long as being capable of making secondary particles, but use of a spray drier is preferable because it can treat a large amount.

In order to reduce the moisture amount contained in the lithium titanate powder, and in order to make the average 10%-compressive strength to be in a suitable range, as the post-treatment step, a heat treatment may be carried out. The heat treatment is allowed to be by any method and under any condition as long as the moisture amount can be reduced and the average 10%-compressive strength is made high, but from the viewpoint of reducing the moisture, it is preferable that the heat treatment temperature be 200°C or more. Further from the viewpoint of making the average 10%-compressive strength of secondary particles high to a suitable range, it is preferable that the heat treatment temperature be 300°C or more. From the viewpoint of making the average 10%-compressive strength not to exceed a suitable range, it is preferable that the heat treatment temperature be 600°C or less. Since when the powder after the heat treatment is exposed as it is to the air, the moisture amount contained in the powder increases, it is preferable that during cooling and after the heat treatment in a heat treatment furnace, the powder be handled under a dew point-managed environment. The powder after the heat treatment, in order to make the secondary particles to be in a range of a desired maximum particle diameter, may be classified as needed. In the case where the powder is taken out to an environment whose dew point is not managed, it is preferable that the lithium titanate powder of the present invention, after being sealed in an aluminum laminate bag or the like, be taken out to the environment whose dew point is not managed. Also under the dew point management, since when the lithium titanate powder after the heat treatment is subjected to milling, moisture becomes liable to be incorporated from milled surfaces and the moisture amount contained in the powder increases, it is preferable, in the case where the heat treatment has been carried out, that milling be not carried out.

[Active material]

The active material of the present invention comprises the lithium titanate powder. The active material may contain one or two or more substances other than the lithium titanate powder. As the other substances, there are used, for example, carbon materials [pyrolytic carbon, cokes, graphites (artificial graphite, natural graphite), burned organic polymeric compounds, carbon fibers], tin and tin compounds, and silicon and silicon compounds.

[Electrode sheet]

The electrode sheet of the present invention is a sheet having a mixture layer containing an active material, a conductive material and a binder on one surface or both surfaces of a current collector, and is cut after a designing shape of an energy storage device, and used as a positive electrode or a negative electrode.

The electrode sheet of the present invention is an electrode sheet comprising the lithium titanate powder of the present invention, and it is preferable that the electrode sheet be produced by calcining a mixture composed of a titanium raw material and a lithium raw material, granulating the obtained calcined material, subjecting the resultant to a heat treatment in the temperature range of 300 to 600°C in an environment whose dew point is managed at -20°C or less, and cooling the resultant, and mixing the obtained lithium titanate powder of the present invention with a conductive agent and a binder in the environment whose dew point is managed at -20°C or less substantially without exposing the powder to the air. Here, substantially without exposing to the air refers to, in addition to not exposing to the air at all, exposing to the air to such an extent that the moisture amount (25°C to 350°C) of the lithium titanate powder of the present invention as measured by Karl Fischer's method does not increase.

Then, there are few the cases where the lithium titanate powder of the present invention contained in the active material in the electrode sheet has completely maintained secondary particles in the process of being mixed with a conductive agent and a binder, and further in the process of forming a mixture layer. In particular, since the lithium titanate powder of the present invention has an average 10%-compressive strength of 0.1 MPa or more and 3 MPa or less and is thus relatively soft, it is usual that the D50 of the lithium titanate powder of the present invention becomes smaller when the lithium titanate powder is subjected to an electrode sheet forming process and contained in the electrode sheet than before the electrode sheet formation. Specifically, the D50 of the lithium titanate powder of the present invention in the case where the lithium titanate powder is contained in the electrode sheet is preferable 1 μm or more and 30 μm or less and more preferably 2 μm or more and 25 μm or less.

[Energy storage device]

The energy storage device of the present invention is a device storing and releasing energy by utilizing intercalation and deintercalation of lithium ions, and examples thereof include hybrid capacitors and lithium batteries.

[Hybrid capacitor]

The hybrid capacitor is a device which uses, for a positive electrode, an active substance forming a capacity by the similar physical adsorption as in electrode materials of electric double layer capacitors, such as active carbon, an active substance forming a capacity by physical adsorption and intercalation and deintercalation, such as graphite, or an active substance forming a capacity by redox, such as conductive polymers, and uses the above-mentioned active material for a negative electrode. The active material is usually used in a form of an electrode sheet.

[Lithium battery]

The lithium battery of the present invention is a generic term of lithium primary batteries and lithium secondary batteries. Further in the present description, the term of the lithium secondary batteries is used as a concept including also so-called lithium ion secondary batteries.
The lithium battery is constituted of a positive electrode, a negative electrode and a nonaqueous electrolytic solution in which an electrolyte salt is dissolved in a nonaqueous solvent, but the above active material can be used as an electrode material. The active material is usually used in a form of an electrode sheet. The active material is allowed to be used as either of a positive electrode active substance and a negative electrode active substance, but hereinafter, the case of using the active material as a negative electrode active substance will be described.

<Negative electrode>

The negative electrode has a mixture layer containing a negative electrode active substance (active material of the present invention), a conductive agent and a binder on one surface or both surfaces of a negative electrode current collector. The mixture layer usually takes a form of an electrode sheet. In the case where the negative electrode current collector is one having pores such as a porous body, the negative electrode has the mixture layer containing the negative electrode active substance (active material of the present invention), the conductive agent and the binder in the pores.
The conductive agent for the negative electrode is not especially limited as long as being an electronic conductive material. Examples thereof include graphites such as natural graphite (flake graphite and the like) and artificial graphite, carbon blacks such as acetylene black, Ketjen black, channel black, furnace black, lamp black and thermal black, and carbon nanotubes such as single-wall carbon nanotubes, multi-wall carbon nanotubes (cylindrical shape in which graphite layers are of a multi-layer concentric circle)(non-fishbone-like), cup stacked-type carbon nanotubes (fishbone-like), knot-type carbon nanofibers (non-fishbone structure), and platelet-type carbon nanofibers (card-like). Further graphites, carbon blacks and carbon nanotubes may be used by being suitably mixed. The specific surface area of the carbon blacks is, though not being especially limited, preferably 30 to 3,000 m²/g and more preferably 50 to 2,000 m²/g. Then the specific surface area of the graphites is preferably 30 to 600 m²/g and more preferably 50 to 500 m²/g. Then the aspect ratio of the carbon nanotubes is 2 to 150 and preferably 2 to 100 and more preferably 2 to 50.
The amount of the conductive agent added, since depending on the specific surface area of the active substance and the kind and combination of the conductive agent, must be optimized, but is preferably 0.1 to 10% by mass and more preferably 0.5 to 5% by mass in the mixture layer. With the amount being less than 0.1% by mass, the conductivity of the mixture layer cannot be secured; and with the amount exceeding 10% by mass, since the active substance ratio is decreased and the discharge capacities of an energy storage device per unit mass and unit volume of the mixture layer become insufficient, the amount is not suitable for capacity enhancement.
Examples of the binder for the negative electrode include polytetrafluoroethylene (PTFE), polyvinylidene fluoride (PVDF), polyvinyl pyrrolidone (PVP), copolymers (SBR) of styrene and butadiene, copolymers (NBR) of acrylonitrile and butadiene and carboxymethylcellulose (CMC). The molecular weight of the polyvinylidene fluoride is, though not being especially limited, preferably 20,000 to 200,000. From the viewpoint of securing the bindability of the mixture layer, 25,000 or more is preferable; 30,000 or more is more preferable; and 50,000 or more is still more preferable. From the viewpoint of securing the conductivity without inhibiting contact of the active substance with the conductive agent, 150,000 or less is preferable. In particular, in the case where the specific surface area of the active substance is 10 $m^2$/g or more, it is preferable that the molecular weight be 100,000 or more.

The amount of the binder added, since depending on the specific surface area of the active substance and the kind and combination of the conductive agent, must be optimized, but is preferably 0.2 to 15% by mass in the mixture layer. From the viewpoint of enhancing the bindability and securing the strength of the mixture layer, 0.5% by mass or more is preferable; 1% by mass or more is more preferable; and 2% by mass or more is still more preferable. From the viewpoint of avoiding that the active substance ratio is decreased and the discharge capacities of an energy storage device per unit mass and unit volume of the mixture layer are reduced, 10% by mass or less is preferable and 5% by mass or less is more preferable.

Examples of the negative electrode current collector include aluminum, stainless steel, nickel, copper, titanium, calcined carbon, and these materials whose surface has been coated with carbon, nickel, titanium or silver. Further the surface of these materials may be oxidized, and unevenness may be imparted to the negative electrode current collector surface by a surface treatment. Then examples of forms of the negative electrode current collector include formed bodied of sheets, nets, foils, films, punched materials, lath bodies, porous bodies, foamed bodies, fiber groups and nonwoven fabrics. As a form of the negative electrode current collector, porous aluminum is preferable. The porosity of the porous aluminum is 80% or more and 95% or less, and preferably 85% or more.

The negative electrode can be obtained by a manufacture method involving mixing a negative electrode active substance (active material of the present invention), a conductive agent and a binder homogeneously in a solvent to thereby make a coating material, thereafter coating the coating material on the negative electrode current collector, and drying and compressing the resultant. In the case of the negative electrode current collector having pores such as a porous body or the like, the negative electrode can be obtained by introducing under pressure and filling the coating material in which the negative electrode active substance (active material of the present invention), the conductive agent and the binder are mixed homogeneously, in the solvent, or immersing the current collector having pores in the coating material to thereby diffuse the coating material into the pores, and thereafter, drying and compressing the resultant.

As a method of mixing the negative electrode active substance (active material of the present invention), the conductive agent and the binder homogeneously in the solvent to thereby make a coating material, there can be used, for example, a kneader of a type of a stirring bar revolving while rotating in a kneader vessel, such as a planetary mixer, a twin-screw extruder-type kneader, a planetary-type agitating and defoaming apparatus, a bead mill, a high-speed swirling mixer, a powder sucking, continuously dissolving and dispersing apparatus or the like. Further the production step may be divided by solid content concentration, and apparatuses corresponding to the divided steps each may be used properly.

The condition of mixing the negative electrode active substance (active material of the present invention), the conductive agent and the binder homogeneously in the solvent, since depending on the specific surface area of the active substance, the kind of the conductive agent, the kind of the binder, and combinations thereof, must be optimized, but in the case of using a kneader of a type of a stirring bar revolving while rotating in a kneader vessel, such as a planetary mixer, a twin-screw extruder-type kneader, a planetary-type agitating and defoaming apparatus, or the like, it is preferable that the production step be divided by solid content concentration into steps; and kneading be carried out in a state of a high solid content concentration, and thereafter, the solid content concentration be decreased step by step to thereby regulate the viscosity. The state of a high solid content concentration is preferably 60 to 90% by mass and more preferably 70 to 90% by mass. The case of less than 60% by mass does not give a shearing force and the case of more than 90% by mass makes a load of an apparatus high; so the cases are not suitable.

A mixing procedure is not especially limited, but includes a method of mixing the negative electrode active substance, the conductive agent and the binder simultaneously in the solvent, a method of previously mixing the conductive agent and the binder in the solvent, and thereafter adding and mixing the negative electrode active substance, and a method of previously manufacturing a negative electrode active substance slurry, a conductive agent slurry and a binder solution, and mixing these. Among these, in order to carry out homogeneous dispersing, preferable are the method of previously mixing the conductive agent and the binder in the solvent, and thereafter adding and mixing the negative electrode active substance, and the method of previously manufacturing a negative electrode active substance slurry, a conductive agent slurry and a binder solution, and mixing these.

As the solvent, an organic solvent can be used. The organic solvent includes single substances or mixtures of two or more of aprotic organic solvents such as N-methylpyrrolidone, dimethylacetoamide and dimethylformamide; and preferable is N-methylpyrrolidone.

In the case where an organic solvent is used as the solvent, it is preferable to use an organic solvent containing the binder previously dissolved therein.

<Positive electrode>

The positive electrode has a mixture layer containing a positive electrode active substance, a conductive agent and a binder on one surface or both surfaces of a positive electrode current collector.

As the positive electrode active substance, a material capable of absorbing and releasing lithium is used, and examples of the active substance include composite metal oxides of lithium containing cobalt, manganese or nickel, and lithium-containing olivine-type phosphate salts. These positive electrode active substances can be used singly or in a combination of two or more. Examples of such composite metal oxides include $LiCoO_2$, $LiMn_2O_4$, $LiNiO_2$, $LiCo_{1-x}Ni_xO_2$ (0.01<x<1), $LiCo_{1/3}Ni_{1/3}Mn_{1/3}O_2$ and $LiNi_{1/2}Mn_{3/2}O_4$, and part of these lithium composite oxides may be substituted by other elements; part of cobalt, manganese or nickel can be substituted by at least one or more elements of Sn, Mg, Fe, Ti, Al, Zr, Cr, V, Ga, Zn, Cu, Bi, Mo, La and the like; or, part of O can be substituted by S or F; or, the lithium composite oxides can be coated with a compound containing these other elements. Examples of the lithium-containing olivine-type phosphate salts include $LiFePO_4$, $LiCoPO_4$, $LiNiPO_4$, $LiMnPO_4$ and $LiFe_{1-x}M_xPO_4$ (M is at least one selected from Co, Ni, Mn, Cu, Zn and Cd, and x is $0<x\leq0.5$).

The conductive agent and the binder for the positive electrode include the same as for the negative electrode. Examples of the positive electrode current collector include aluminum, stainless steel, nickel, titanium, calcined carbon, and aluminum and stainless steel whose surface has been coated with carbon, nickel, titanium or silver. Further the surface of these materials may be oxidized, and unevenness may be imparted to the positive electrode current collector surface by a surface treatment. Then examples of forms of the current collector include formed bodies of sheets, nets, foils, films, punched materials, lath bodies, porous bodies, foamed bodies, fiber groups and nonwoven fabrics.

<Nonaqueous electrolytic solution>

The nonaqueous electrolytic solution is one in which an electrolyte salt is dissolved in a nonaqueous solvent. The nonaqueous electrolytic solution is not especially limited, and various type thereof can be used.

As the electrolyte salt, one which dissolves in a nonaqueous electrolyte is used, and examples thereof include inorganic lithium salts such as $LiPF_6$, $LiBF_4$, $LiPO_2F_2$, $LiN(SO_2F)_2$ and $LiClO_4$, lithium salts containing chain fluoroalkyl groups such as $LiN(SO_2CF_3)_2$, $LiN(SO_2C_2F_5)_2$, $LiCF_3SO_3$, $LiC(SO_2CF_3)_3$, $LiPF_4(CF_3)_2$, $LiPF_3(C_2F_5)_3$, $LiPF_3(CF_3)_3$, $LiPF_3(iso-C_3F_7)_3$ and $LiPF_5(iso-C_3F_7)$, lithium salts containing cyclic fluoroalkylene chains such as $(CF_2)_2(SO_2)_2NLi$ and $(CF_2)_3(SO_2)_2NLi$, and lithium salts having, as an anion, an oxalate complex, such as lithium bis[oxalate-O,O']borate and lithium difluoro[oxalate-O,O']borate. Among these, especially preferable electrolyte salts are $LiPF_6$, $LiBF_4$, $LiPO_2F_2$ and $LiN(SO_2F)_2$, and the most preferable one is $LiPF_6$. These electrolyte salts can be used singly or in a combination of two or more. As suitable combinations of these electrolyte salts, preferable are the cases where $LiPF_6$ and further at least one lithium salt selected from $LiBF_4$, $LiPO_2F_2$, $LiN(SO_2F)_2$ are contained in the nonaqueous electrolytic solution.

The concentration of all these electrolyte salts to be dissolved and used is, with respect to the nonaqueous solvent, usually preferably 0.3 M or more, more preferably 0.5 M or more and still more preferably 0.7 M or more. The upper limit thereof is preferably 2.5 M or less, more preferably 2.0 M or less and still more preferably 1.5 M or less.

On the other hand, the nonaqueous solvent includes cyclic carbonates, chain carbonates, chain esters, ethers, amides, phosphate esters, sulfones, lactones, nitriles and S=O bond-containing compounds, and preferably includes cyclic carbonates. Here, the term, "chain esters" is used as a concept including chain carbonates and chain carboxylate esters.

The cyclic carbonate includes one or two or more selected from ethylene carbonate (EC), propylene carbonate (PC), 1,2-butylene carbonate, 2,3-butylene carbonate, 4-fluoro-1,3-dioxolan-2-one (PEC), trans- or cis-4,5-difluoro-1,3-dioxolan-2-one (hereinafter, both are generically referred to as "DFEC"), vinylene carbonate (VC), vinyl ethylene carbonate (VEC) and 4-ethynyl-1,3-dioxolan-2-one (EEC); at least one or more selected from ethylene carbonate, propylene carbonate, 1,2-butylene carbonate, 2,3-butylene carbonate, 4-fluoro-1,3-dioxolan-2-one and 4-ethynyl-1,3-dioxolan-2-one (EEC) are more suitable from the viewpoint of suppressing the resistance rise, the capacity reduction and the gas generation in high-temperature charge and discharge cycles of an energy storage device; and one or more of cyclic carbonates having an alkylene chain selected from propylene carbonate, 1,2-butylene carbonate and 2,3-butylene carbonate are still more suitable. It is preferable that the proportion of cyclic carbonates having an alkylene chain in all cyclic carbonates be 55% by volume to 100% by volume, and 60% by volume to 90% by volume is more preferable.

Therefore, with respect to the nonaqueous electrolytic solution, it is preferable to use a nonaqueous electrolytic solution in which at least one lithium salt selected from $LiPF_6$, $LiBF_4$, $LiPO_2F_2$ and $LiN(SO_2F)_2$ is dissolved in a nonaqueous solvent containing at least one or more cyclic carbonates selected from ethylene carbonate, propylene carbonate, 1,2-butylene carbonate, 2,3-butylene carbonate, 4-fluoro-1,3-dioxolan-2-one and 4-ethynyl-1,3-dioxolan-2-one; and it is more preferable that the cyclic carbonate be one or more cyclic carbonates having an alkylene chain selected from propylene carbonate, 1,2-butylene carbonate and 2,3-butylene carbonate.

Then it is especially preferable to use a nonaqueous electrolytic solution having a concentration of all electrolyte salts of 0.5 M or more and 2.0 M or less, and including at least $LiPF_6$ as the electrolyte salt and further including at least one lithium salt selected from $LiBF_4$, $LiPO_2F_2$ and $LiN(SO_2F)_2$ within a range of 0.001 M or more and 1 M or less. When the proportion of lithium salts other than $LiPF_6$ in the nonaqueous solvent is 0.001 M or more, there is easily exhibited the effect of suppressing the resistance rise, the capacity reduction and the gas generation in high-temperature charge and discharge cycles of an energy storage device; when being 1.0 M or less, it is preferable because of being little apprehensive of reducing the effect of suppressing the resistance rise, the capacity reduction and the gas generation in high-temperature charge and discharge cycles of an energy storage device. The proportion of lithium salts other than $LiPF_6$ in the nonaqueous solvent is preferably 0.01 M or more, especially preferably 0.03 M or more and most preferably 0.04 M or more. The upper limit thereof is preferably 0.8 M or less, more preferably 0.6 M or less and especially preferably 0.4 M or less.

It is preferable that in order to attain suitable physical properties, the nonaqueous solvent be used as a mixture. Examples of the combination include combinations of a cyclic carbonate and a chain carbonate, combinations of a cyclic carbonate, a chain carbonate and a lactone, combinations of a cyclic carbonate, a chain carbonate and an ether, combinations of a cyclic carbonate, a chain carbonate and a chain ester, combinations of a cyclic carbonate, a chain carbonate and a nitrile, and combinations of a cyclic carbonate, a chain carbonate and a S=O bond-containing compound.

The chain ester suitably includes one or two or more asymmetric chain carbonates selected from methyl ethyl carbonate (MEC), methyl propyl carbonate (MPC), methyl isopropyl carbonate (MIPC), methyl butyl carbonate and ethyl propyl carbonate, one or two or more symmetric chain carbonates selected from dimethyl carbonate (DMC), diethyl carbonate (DEC), dipropyl carbonate and dibutyl carbonate, and one or two or more chain carboxylate esters selected from pivalate esters such as methyl pivalate, ethyl pivalate and propyl pivalate, methyl propionate, ethyl propionate, propyl propionate, methyl acetate and ethyl acetate (EA).

Among the chain esters, preferable are chain esters having a methyl group selected from dimethyl carbonate, methyl ethyl carbonate, methyl propyl carbonate, methyl isopropyl carbonate, methyl butyl carbonate, methyl propionate, methyl acetate and ethyl acetate (EA); and especially preferable are chain carbonates having a methyl group.

Then in the case of using chain carbonate, it is preferable to use two or more thereof. Further, it is more preferable that both of a symmetric chain carbonate and an asymmetric carbonate be contained; and it is still more preferable that the content of the symmetric carbonate be higher than the asymmetric carbonate.

The content of the chain ester is not especially limited, but it is preferable to use the chain ester in the range of 60 to 90% by volume to the total volume of the nonaqueous solvent. With the content being 60% by volume or more, the viscosity of the nonaqueous electrolytic solution does not become too high; and when the content is 90% by volume or less, this range is preferable because of being little apprehensive of reducing the effect of suppressing the resistance rise, the capacity reduction and the gas generation in high-temperature charge and discharge cycles of an energy storage device due to a decrease in the electroconductivity of the nonaqueous electrolytic solution.

The proportion in volume of the symmetric chain carbonate in the chain carbonate is preferably 51% by volume or more and more preferably 55% by volume or more. The upper limit thereof is preferably 95% by volume or less and still more preferably 85% by volume or less. It is especially preferable that the symmetric chain carbonate contain dimethyl carbonate. Then it is more preferable that the asymmetric chain carbonate have a methyl group, and methyl ethyl carbonate is especially preferable. The above case is preferable because of improving the effect of suppressing the resistance rise, the capacity reduction and the gas generation in high-temperature charge and discharge cycles of an energy storage device.

With respect to the proportions of the cyclic carbonate and the chain ester, from the viewpoint of enhancing the effect of suppressing the resistance rise, the capacity reduction and the gas generation in high-temperature charge and discharge cycles of an energy storage device, the cyclic carbonate : the chain ester (in volume) is preferably 10: 90 to 45 : 55, more preferably 15 : 85 to 40: 60 and especially preferably 20: 80 to 35: 65.

<Structure of lithium batteries>

The structure of the lithium battery of the present invention is not especially limited, and examples thereof include coin-type batteries having a positive electrode, a negative electrode and a single-layer or multi-layer separator, and cylindrical batteries and rectangular batteries having a positive electrode, a negative electrode and a rolled separator.

As the separator, there is used an insulating thin membrane having a high ion permeability and having a predetermined mechanical strength. Examples thereof include polyethylene, polypropylene, cellulose paper, glass fiber paper, polyethylene terephthalate and polyimide microporous membrane, and multi-layer membranes constituted by combining two or more thereof can also be used. Further the surface of these separators can also be coated with a resin such as PVDF, a silicone resin or a rubber-based resin, a particle of a metal oxide such as aluminum oxide, silicon dioxide or magnesium oxide, or the like. The pore diameter of the separator suffices if being in a usually useful range for batteries, and is, for example, 0.01 to 10 μm. The thickness of the separator suffices if being in a usual range for batteries, and is, for example, 5 to 300 μm.

Examples

Then, the present invention will be described more specifically by way of Examples and Comparative Examples, but the present invention is not any more limited to the following Examples, and various combinations easily inferable from the gist of the invention are included. In particular, solvents are not limited to combinations of solvents of Examples. The production conditions of Examples and Comparative Examples described below are described collectively in Table 1.

[Example 1]

<Raw material preparation step>

Li$_2$CO$_3$(average particle diameter: 4.6 $\mu$m) and an anatase-type TiO$_2$ (specific surface area: 10 m$^2$/g) were weighed so that the atomic ratio Li/Ti of Li to Ti became 0.83 to thereby obtain a raw material powder, and ion-exchange water was added to the obtained raw material powder so that the solid content concentration of a slurry became 41% by mass and stirred to thereby manufacture a raw material mixed slurry. The raw material mixed slurry was wet mixed and milled by using a bead mill (manufactured by Willy A. Bachofen AG, type: DYNO-MILL KD-20BC, agitator material: polyurethane, vessel inner material: zirconia) in which zirconia beads (outer diameter: 0.65 mm) were filled in the vessel by 80% by volume and whose operation was controlled at an agitator rotation speed of 13 m/s, a slurry feed rate of 55 kg/hr and a vessel inner pressure of 0.02 to 0.03 MPa or less.

<Calcination step>

The obtained mixed slurry was fed into a furnace core tube of a rotary-kiln type calcination furnace (furnace core tube length: 4 m, furnace core tube diameter: 30 cm, external heating type) with an adhesion prevention mechanism from the raw material feed side of the calcination furnace, and dried and calcined in a nitrogen atmosphere. Operating and calcining conditions at this time were set at a tilt angle of the furnace core tube of 2 degrees from the horizontal direction, a furnace core tube rotation speed of 20 rpm, a flow rate of nitrogen injected into the furnace core tube from the calcined material recovery side of 20 L/min, heating temperatures of the furnace core tube of 900°C for the raw material feed side, 900°C for the central section and 900°C for the calcined material recovery side, and a holding time at 900°C for a calcined material of 30 min.

<Post-treatment step>

The calcined material recovered from the calcined material recovery side of the furnace core tube was deagglomerated by using a hammer mill (manufactured by Dalton Co., Ltd., AIIW-5 type) under the condition of a screen mesh size of 0.5 mm, a rotation frequency of 8,000 rpm and a powder feed rate of 25 kg/hr. Ion-exchange water was added to the deagglomerated calcined powder so that the solid content concentration of the slurry became 30% by mass, and stirred to thereby manufacture a calcined powder mixed slurry. The mixed slurry was sprayed and dried to be granulated by using a spray drier (manufactured by Okawara Kakouki Co., Ltd., L-8i) at an atomizer rotation frequency of 25,000 rpm and at an inlet port temperature of 210°C. Then, the powder having passed through a sieve was put in an alumina sagger and was subjected to a heat treatment at 500°C for 1 hour in a mesh belt conveyor continuous furnace equipped with a recovery box managed at a temperature of 25°C and a dew point of -20°C or less on the outlet port side. The powder after the heat treatment was cooled in the recovery box, and sieved (mesh size of 53 $\mu$m); the powder having passed through the sieve was collected in an aluminum laminate bag, and sealed, and thereafter taken out from the recovery box to thereby obtain a lithium titanate powder according to Example 1.

[Table 1]

Table 1

| | Raw Materials of Lithium Titanate | | | | Preparation of Raw Materials | | | | Calcination | | | Post-Treatment | | | | | | Classification | Dew Point Management |
| | Lithium Raw Material | | Titanium Raw Material | | | | | | | | | Milling · Deagglomeration | | Granulation | | Heat Treatment | | | |
| | Kind | Average Particle Diameter (μm) | Kind | Specific Surface Area (m²/g) | Mixing | Solid Content Concentration of Slurry (%) | Spray Drying | Form | Calcination Furnace | Maximum Temperature | Holding Time | Bead Mill Milling & Drying | Hammer Mill Deagglomeration | Spray Drying | Solid Content Concentration of Slurry (%) | Temperature | Time | Classification | Dew Point Management |
|---|---|---|---|---|---|---|---|---|---|---|---|---|---|---|---|---|---|---|---|
| Example 1 | Li₂CO₃ | 4.6 | anatase TiO₂ | 10 | wet bead mill | 41 | | slurry | rotary kiln | 900°C | 30min | | present | present | 30 | 500°C | 1h | present | -20°C |
| Example 2 | | | | | | | | | | | | | | | | 600°C | 3h | | |
| Example 3 | | | | | | | | | | | | | | | | 500°C | 2h | | |
| Example 4 | | | | | | | | | | | | | | | | 400°C | 1h | | |
| Example 5 | | | | | dry mixing | | | powder | muffle furnace | 850°C | 1h | | | | | | | | |
| Example 6 | | | | 300 | | | | | | 810°C | 6min | | | | | | | | |
| Example 7 | | | | | wet bead mill | 41 | | slurry | rotary kiln | 850°C | 30min | | | | 10 | F | 1h | | |
| Example 8 | | | | 10 | | | | | | 900°C | | | | | 45 | | | | |
| Example 9 | | | | | | | | | | | | | | | 30 | | | | |
| Example 10 | | | | | | | | | | | | | | | | | | | -15°C |
| Comparative Example 1 | Li₂CO₃ | 4.6 | anatase TiO₂ | 10 | wet bead mill | 41 | | slurry | rotary kiln | 900°C | 30min | | present | present | 30 | 200°C | 24h | present | -20°C |
| Comparative Example 2 | | | | | | | | | | | | | | | | | | | |
| Comparative Example 3 | | | | | | | present | powder | | 810°C | 15min | | | | | | | | |
| Comparative Example 4 | | | | | | | | | | 830°C | 30min | | | | | | | | |
| Comparative Example 5 | | | | | dry mixing | | | powder | muffle furnace | 900°C | 6h | | | | 30 | 500°C | 1h | present | |
| Comparative Example 6 | | | | 300 | | | | | | 750°C | 15min | | | | 5 | | | | |
| Comparative Example 7 | | | | 10 | wet bead mill | 41 | | slurry | rotary kiln | 900°C | 30min | | present | present | 50 | | | | |
| Comparative Example 8 | Li₂CO₃ | 4.6 | anatase TiO₂ | | dry mixing | | | powder | muffle furnace | 850°C | 1h | | | | 20 | | | | |
| Comparative Example 9 | | | | 300 | | | | | | 810°C | 6min | | | | 35 | | | | |
| Comparative Example 10 | | | | | | | | slurry | rotary kiln | 900°C | 30min | | | | 30 | | | | |
| Comparative Example 11 | | | | | | | | | | | | | | | | | | | 0°C |
| Comparative Example 12 | | | | | wet bead mill | 41 | | | | | | | | | | | | | absent (40°C) |
| Comparative Example 13 | | | | 10 | | | present | powder | muffle furnace | 700°C | 3h | | | | | | | | |
| Comparative Example 14 | | | | | | | | | | 900°C | 30min | | | | | | | | |
| Comparative Example 15 | | | | | | | | slurry | rotary kiln | | | present | present | present | 30 | 800°C | 1h | present | -20°C |
| Comparative Example 16 | | | | | | | present | powder | muffle furnace | 820°C | 3h | | | | | 500°C | | | -70°C |

EP 3 480 873 A1

[Examples 2 to 5]

Lithium titanate powders according to Examples 2 to 5 were produced as in Example 1, except for setting one of or both of the heat treatment temperature and the heat treatment time in the post-treatment step as indicated in Table 1.

[Example 6]

A lithium titanate powder according to Example 6 was produced by the same method as in Example 1, except for dry mixing raw material powders by a Henschel mixer-type mixer (manufactured by Kawata Mfg. Co., Ltd., SUPERMIXER SMV(G)-200) for 30 min, filling an obtained mixed powder in a high-purity alumina sagger and calcining the mixed powder by using a muffle furnace in an air atmosphere at 850°C for 1 hour.

[Example 7]

A lithium titanate powder according to Example 7 was produced by the same method as in Example 1, except for using a microparticulate anatase-type $TiO_2$ (specific surface area: 300 m$^2$/g) as the raw material, and carrying out calcination with the maximum temperature and the holding time at the maximum temperature in the calcination step being set as indicated in Table 1.

[Example 8]

A lithium titanate powder according to Example 8 was produced by the same method as in Example 1, except for setting the maximum temperature in the calcination step and the solid content concentration of the calcined powder mixed slurry used for the granulation in the post-treatment step as indicated in Table 1.

[Example 9]

A lithium titanate powder according to Example 9 was produced as in Example 1, except for setting the solid content concentration of the calcined powder mixed slurry used for the granulation in the post-treatment step as indicated in Table 1.

[Example 10]

A lithium titanate powder according to Example 10 was produced by the same method as in Example 1, except for setting the dew point of the recovery box of the mesh belt conveyor continuous furnace in the post-treatment step as indicated in Table 1.

[Comparative Example 1]

A lithium titanate powder according to Comparative Example 1 was produced as in Example 1, except for setting the heat treatment temperature and the heat treatment time in the post-treatment step as indicated in Table 1.

[Comparative Example 2]

A lithium titanate powder according to Comparative Example 2 was produced as in Example 1, except for carrying out no granulation after the deagglomeration by a hammer mill in the post-treatment step, and setting the heat treatment temperature and the heat treatment time in the post-treatment step as indicated in Table 1.

[Comparative Example 3]

A raw material mixed slurry obtained as in Example 1 was sprayed and dried to be granulated by using a spray drier (manufactured by Okawara Kakouki Co., Ltd., L-8i) at an atomizer rotation frequency of 25,000 rpm and an inlet port temperature of 210°C, and calcination of a granulated powder obtained by the granulation was carried out by the same method as in Example 1, except for setting the maximum temperature and the holding time at the maximum temperature in the calcination step as indicated in Table 1. A lithium titanate powder according to Comparative Example 3 was produced by carrying out the post-treatment under the same condition as in Example 1, except for carrying out no deagglomeration of the obtained calcined powder by a hammer mill and carrying out no granulation in the post-treatment step.

[Comparative Example 4]

A lithium titanate powder according to Comparative Example 4 was produced as in Comparative Example 3, except for setting the maximum temperature and the holding time at the maximum temperature in the calcination step as indicated in Table 1.

[Comparative Example 5]

A lithium titanate powder according to Comparative Example 5 was produced as in Example 6, except for setting the maximum temperature and the holding time at the maximum temperature in the calcination step as indicated in Table 1.

[Comparative Example 6]

A lithium titanate powder according to Comparative Example 6 was produced as in Example 7, except for setting the maximum temperature and the holding time at the maximum temperature in the calcination step as indicated in Table 1.

[Comparative Examples 7 and 8]

Lithium titanate powders according to Comparative Examples 7 and 8 were produced as in Example 1, except for setting the solid content concentration of the calcined powder mixed slurry used for the granulation in the post-treatment step as indicated in Table 1.

[Comparative Example 9]

A lithium titanate powder according to Example 9 was produced as in Example 6, except for setting the solid content concentration of the calcined powder mixed slurry used for the granulation in the post-treatment step as indicated in Table 1.

[Comparative Example 10]

A lithium titanate powder according to Example 10 was produced as in Example 7, except for setting the solid content concentration of the calcined powder mixed slurry used for the granulation in the post-treatment step as indicated in Table 1.

[Comparative Examples 11 and 12]

Lithium titanate powders according to Comparative Examples 11 and 12 were produced by the same method as in Example 1, except for managing the dew point of the recovery box of the mesh belt conveyor continuous furnace in the post-treatment step as indicated in Table 1.

[Comparative Example 13]

A lithium titanate powder according to Comparative Example 13 was produced by carrying out the raw material preparation by the same method as in Comparative Example 3 and calcining the obtained granulated powder as in Example 6, except for setting the maximum temperature and the holding time at the maximum temperature as indicated in Table 1, and by carrying out no post-treatment step.

[Comparative Example 14]

A lithium titanate powder according to Comparative Example 14 was produced as in Comparative Example 13, except for setting the maximum temperature in the calcination step as indicated in Table 1.

[Comparative Example 15]

A lithium titanate powder according to Comparative Example 15 was produced as in Example 1, except for setting the heat treatment temperature in the post-treatment step as indicated in Table 1.

[Comparative Example 16]

Calcination of the granulated powder was carried out by the same method as in Comparative Example 13, except for setting the maximum temperature in the calcination step as indicated in Table 1. The obtained calcined powder was milled by using ion-exchange water and a bead mill, and dried and further deagglomerated by a hammer mill. Thereafter, a lithium titanate powder according to Comparative Example 16 was produced by carrying out the post-treatment under the same condition as in Comparative Example 3, except for setting the dew point of the recovery box of the mesh belt conveyor continuous furnace as indicated in Table 1, and carrying out no classification.

[Measurement of the powder physical properties]

Various physical properties of the lithium titanate powders (hereinafter, described as the lithium titanate powder of each Example in some cases) of Examples 1 to 10 and Comparative Examples 1 to 16 were measured as follows. The measurement results are shown in Table 2.

[Table 2]

Table 2

| | Powder Properties | | | | | | | | Moisture Amount (ppm) | | | Electrode | | | Battery Properties | | | | |
| | | | | | | | | | | | | | | | Coin-type Battery | 800-mAh Laminate Battery | | | |
| | Average 10%-Compressive strength of Secondary Particles (MPa) | Average Compressive breaking Strength of Secondary Particles (MPa) | Specific Surface Area (m²/g) | $D_{BET}$ (µm) | D50 (µm) | $D_{max}$ (µm) | D50/$D_{BET}$ (µm/µm) | Average Degree of Circularity (%) | 25 to 200° C | 200 to 350° C | Total Amount | D50 (µm) | Electrode D50/Powder D50 (µm/µm) | Density (g/cm³) | Negative Electrode | | Resistance Rise Rate after to before Cycle | Capacity Retention Rate (%) | Cycle Test Gas Generation Amount (ml) |
| | | | | | | | | | | | | | | | per Active Substance Amount (mAh/g) | per Mixture Volume (mAh/cm³) | | | |
| Example 1 | 0.48 | undetected | 6.5 | 0.27 | 11.3 | 45.0 | 42.2 | 94 | 287 | 10 | 297 | 6.4 | 0.57 | 2.38 | 170.0 | 364.1 | 1.43 | 96 | 0.6 |
| Example 2 | 2.83 | undetected | 6.6 | 0.26 | 11.0 | 44.5 | 41.7 | 94 | 160 | 5 | 165 | 8.3 | 0.75 | 2.15 | 169.8 | 328.6 | 1.70 | 92 | 0.5 |
| Example 3 | 2.21 | undetected | 6.7 | 0.26 | 11.5 | 44.6 | 44.3 | 95 | 150 | 0 | 150 | 8.1 | 0.70 | 2.17 | 169.7 | 331.4 | 1.65 | 93 | 0.6 |
| Example 4 | 0.95 | undetected | 6.6 | 0.26 | 11.1 | 45.1 | 42.1 | 94 | 213 | 10 | 223 | 7.5 | 0.68 | 2.25 | 169.7 | 343.6 | 1.46 | 95 | 0.7 |
| Example 5 | 0.13 | undetected | 6.9 | 0.25 | 10.8 | 42.3 | 42.8 | 95 | 351 | 70 | 421 | 4.0 | 0.37 | 2.44 | 169.3 | 371.8 | 1.51 | 92 | 0.8 |
| Example 6 | 0.50 | undetected | 3.0 | 0.58 | 12.1 | 43.7 | 20.9 | 90 | 235 | 47 | 282 | 7.3 | 0.60 | 2.33 | 164.0 | 343.9 | 1.51 | 85 | 0.6 |
| Example 7 | 0.47 | undetected | 48.0 | 0.04 | 11.3 | 45.0 | 311.9 | 96 | 435 | 90 | 525 | 7.0 | 0.62 | 2.34 | 168.0 | 353.8 | 1.73 | 93 | 1.5 |
| Example 8 | 0.40 | undetected | 10.5 | 0.17 | 3.5 | 42.7 | 21.1 | 91 | 298 | 60 | 358 | 2.1 | 0.60 | 2.37 | 167.6 | 357.5 | 1.57 | 92 | 0.8 |
| Example 9 | 0.44 | undetected | 5.9 | 0.29 | 38.0 | 43.3 | 128.9 | 95 | 387 | 77 | 464 | 22.2 | 0.58 | 2.36 | 167.4 | 355.6 | 1.53 | 90 | 0.8 |
| Example 10 | 0.47 | undetected | 6.6 | 0.26 | 11.3 | 45.3 | 42.9 | 96 | 381 | 162 | 543 | 6.6 | 0.58 | 2.37 | 169.6 | 361.8 | 1.89 | 94 | 1.4 |
| Example 11*) | 0.48 | undetected | 6.5 | 0.27 | 11.3 | 45.0 | 42.2 | 94 | 287 | 10 | 297 | 7.5 | 0.66 | 2.75 | 170.0 | 420.8 | 1.43 | 98 | 0.6 |
| Comparative Example 1 | 0.05 | undetected | 6.6 | 0.26 | 10.4 | 43.7 | 39.5 | 94 | 314 | 98 | 412 | 0.8 | 0.08 | 2.45 | 169.8 | 374.4 | 4.04 | 75 | 0.8 |
| Comparative Example 2 | 0.00 | undetected | 6.1 | 0.29 | 0.9 | 44.1 | 3.2 | 73 | 326 | 97 | 423 | 0.9 | 1.00 | 2.47 | 169.7 | 377.2 | 4.56 | 73 | 0.8 |
| Comparative Example 3 | 4.07 | 4.40 | 6.3 | 0.28 | 10.8 | 45.3 | 39.1 | 94 | 294 | 24 | 318 | 9.8 | 0.91 | 2.00 | 169.7 | 305.5 | 4.17 | 74 | 0.7 |
| Comparative Example 4 | 6.21 | 6.30 | 6.0 | 0.29 | 7.3 | 44.3 | 25.2 | 92 | 300 | 60 | 360 | 6.8 | 0.93 | 1.98 | 166.8 | 297.2 | 4.11 | 75 | 0.7 |
| Comparative Example 5 | 0.21 | undetected | 1.0 | 1.74 | 15.4 | 43.5 | 8.9 | 85 | 332 | 62 | 394 | 6.0 | 0.39 | 2.43 | 130.0 | 284.3 | 2.14 | 74 | 0.7 |
| Comparative Example 6 | 0.33 | undetected | 60.0 | 0.029 | 6.3 | 44.4 | 217.4 | 96 | 241 | 57 | 298 | 3.7 | 0.59 | 2.40 | 160.0 | 345.6 | 4.32 | 74 | 2.5 |
| Comparative Example 7 | 0.53 | undetected | 5.8 | 0.30 | 2.5 | 41.4 | 8.3 | 88 | 1623 | 52 | 1675 | 1.6 | 0.64 | 2.36 | 169.5 | 360.0 | 4.23 | 72 | 0.6 |
| Comparative Example 8 | 0.47 | undetected | 6.3 | 0.28 | 55.0 | 42.6 | 199.2 | 95 | 304 | 34 | 338 | 35.6 | 0.65 | 2.35 | 155.6 | 329.1 | 2.21 | 73 | 0.6 |
| Comparative Example 9 | 0.64 | undetected | 3.0 | 0.58 | 5.1 | 38.7 | 8.8 | 85 | 312 | 61 | 373 | 3.3 | 0.65 | 2.31 | 164.3 | 341.6 | 4.08 | 91 | 0.6 |
| Comparative Example 10 | 0.37 | undetected | 48.2 | 0.04 | 17.0 | 44.0 | 471.2 | 96 | 434 | 30 | 464 | 8.3 | 0.49 | 2.33 | 169.5 | 355.4 | 4.27 | 90 | 1.5 |
| Comparative Example 11 | 0.41 | undetected | 6.5 | 0.27 | 11.1 | 44.0 | 41.5 | 93 | 504 | 224 | 728 | 5.3 | 0.48 | 2.38 | 170.0 | 364.1 | 4.01 | 76 | 2.2 |
| Comparative Example 12 | 0.63 | undetected | 6.3 | 0.28 | 12.6 | 44.6 | 45.6 | 95 | 1530 | 720 | 2250 | 7.3 | 0.58 | 2.34 | 169.3 | 356.5 | 5.53 | 65 | 5.6 |
| Comparative Example 13 | 6.37 | 6.39 | 4.8 | 0.36 | 7.5 | 132.1 | 20.7 | 94 | 1599 | 477 | 2076 | 7.4 | 0.99 | 1.95 | 162.5 | 285.2 | 6.01 | 61 | 3.0 |
| Comparative Example 14 | 8.21 | 8.27 | 2.5 | 0.70 | 14.7 | 133.0 | 21.1 | 94 | 1497 | 414 | 1911 | 14.3 | 0.97 | 1.91 | 162.7 | 279.7 | 5.86 | 64 | 2.8 |
| Comparative Example 15 | 4.67 | 4.71 | 4.5 | 0.39 | 10.5 | 44.7 | 27.2 | 95 | 336 | 77 | 413 | 10.0 | 0.95 | 1.93 | 164.3 | 285.4 | 4.14 | 74 | 0.8 |
| Comparative Example 16 | 0.00 | undetected | 5.5 | 0.32 | 0.8 | 81.0 | 2.5 | 71 | 380 | 51 | 431 | 0.8 | 1.00 | 2.49 | 163.0 | 405.9 | 4.21 | 75 | 1.1 |

*) In Example 11, whereas the lithium titanate powder used was the same as in Example 1, the negative electrode current collector used in evaluation was altered from an aluminum foil to a porous aluminum.

EP 3 480 873 A1

Here, the moisture amount in Example 3 was below the detection limit of a measuring instrument, and was judged to be substantially 0 ppm in consideration of the detection threshold.

<Measurement of the BET specific surface area (m$^2$/g)>

The BET specific surface area (m$^2$/g) of each of Examples and Comparative Examples was measured by using an automatic BET specific surface area analyzer (manufactured by Mountech Co., Ltd., trade name: "Macsorb HM model-1208") wherein 0.5 g of a measurement sample powder was weighed and put in a Φ12 standard cell (HM1201-031), and the one-point method using liquid nitrogen was used.

<Calculation of the specific surface area-equivalent diameter (D$_{BET}$)>

The specific surface area-equivalent diameter (D$_{BET}$) of the lithium titanate powder of each of Examples and Comparative Examples was determined by the following expression (1) assuming that all particles constituting the powder were spheres having the same diameter. Here, D$_{BET}$ is a specific surface area-equivalent diameter (μm); ps is a true density (3.45 g/cc) of the lithium titanate; and S is a BET specific surface area (m$^2$/g) acquired by the method described in the above-mentioned <Measurement of the BET specific surface area (m$^2$/g)>.

$$D_{BET} = 6/(\rho s \times S) \dots (1)$$

<Calculation of D50 and D$_{max}$>

D50 and D$_{max}$ of the lithium titanate powder of each of Examples and Comparative Examples were calculated from a particle size distribution curve measured by using a laser diffraction scattering-type particle size distribution analyzer (manufactured by Nikkiso Co., Ltd., Microtrac MT3300EXII). 50 mg of a sample was charged in a container accommodating 50 ml of ion-exchange water as a measuring solvent, and the container was shaken by hand to such an extent that the powder was visually recognized to be dispersed homogeneously in the measuring solvent, and accommodated in a measuring cell and subjected to ultrasonic waves (30 W, 3 s) by an ultrasonic generator in the analyzer. The measuring solvent was further added until the transmittance of a slurry falls in a proper range (range indicated by a blue bar on the analyzer) and then the particle size distribution measurement was carried out. From an acquired particle size distribution curve, D50 of the mixed powder, that is, the median particle diameter in volume, and D$_{max}$ thereof, that is, the maximum particle diameter in volume, were calculated. D50/D$_{BET}$ was calculated by dividing D50 by D$_{BET}$.

<Measurement of the average compressive strength of secondary particles>

The measurement of the average compressive strength (10%-compressive strength and compressive breaking strength) of secondary particles of each Example used a Micro Compression Tester, manufactured by Shimadzu Corp., added with a "1 g or less-test force measuring mode". The test mode selected was "compression test"; and the 10%-compressive strength being a strength when a particle was compressed by 10% of the measuring particle diameter, and the compressive breaking strength being a strength when a secondary particle collapsed were measured. Although the analyzer could select a surface detection point and a broken point of compressive breaking of the secondary particle in test data optionally by the judgment of the measurer, the surface detection point and the broken point used in the present application were points automatically detected by the analyzer. That is, the 10%-compressive strength and the compressive breaking strength were values the analyzer automatically detected. The software of the analyzer was Shimadzu MCT test software Version 2.20; and the analysis software was Shimadzu MCT analysis application Version 2.20. Observation by an optical microscope was made on optional locations of a measuring sample dispersed on a sample stage; in the visual field range of the optical microscope, particles which could be judged not to be piled up and to clearly form secondary particles were randomly selected and measured one secondary particle by one secondary particle to determine an average value of 50 secondary particles; and the average value was defined as an "average compressive strength (average 10%-compressive strength and average compressive breaking strength). Here, the analyzer was so configured that the visual field of the optical microscope was taken by a CCD camera and could be checked on real time on a personal computer; and the particle diameter was measured on a length-measuring screen and was read as a measuring particle diameter. The kind of an indenter used was "FLAT50"; and the length-measuring mode used was "single". The "soft sample-measuring mode" was used; and the test force was set at 4.90 mN; and the load rate was set at 0.0100 mN/s, and the load holding time was set at 5 s. Then, that the compressive breaking strength was "undetected" meant the state that even when the test force was loaded up to 4.90 mN, no characteristic change in the broken point was detected. In the present measurement, any sample whose compressive breaking strength became "undetected" was in the state that in all 50 measurements, the compressive breaking strength was "undetected".

<Measurement of the average degree of circularity>

The average degree of circularity is an index of the degree of sphericity when a particle is projected on a two-dimensional plane, and the index replacing the degree of sphericity. In the present invention, for each of secondary particles of the lithium titanate powder of each Example, a value in percentage of a peripheral length of a true circle having the same area as that of a particle being a measuring object to a peripheral length of the particle being the measuring object was determined as a degree of circularity of the each particle; and the average value thereof was defined as an average degree of circularity. The peripheral length of the particle being the measuring object was determined by image processing a SEM image; and the degree of circularity was determined by the following expression (2). 50 particles were randomly selected from a plurality of SEM images measured for optional locations, and the average value of degrees of circularity of the 50 particles randomly selected was defined as an average degree of circularity.

$$\text{Degree of circularity} = \text{(a peripheral length of a true circle having the same area as that of a particle being a measuring object)} / \text{(a peripheral length of the particle being the measuring object)} \times 100 \ (\%) \ ... \ (2)$$

<Measurement of the moisture amount by Karl Fischer's method>

The moisture amount of the lithium titanate powder of each Example was measured as follows, by using a Karl Fischer moisture meter (manufactured by Hiranuma Sangyo Corp., AQ-2200) equipped with a moisture vaporization device (manufactured by Hiranuma Sangyo Corp., EV-2000) and using dry nitrogen as a carrier gas. 1 g of the lithium titanate powder of each Example was charged from a charging port in a cell of the moisture vaporization device; the lid of the cell was closed; and the measurement was started. Simultaneously on pressing the starting button of the device, a heater whose temperature had become 200°C was elevated and covered the cell, and this state was held for 1 hour. Moisture generated from the measurement start to the completion of the holding at 200°C was defined as a moisture amount (25°C to 200°C) measured by Karl Fischer's method (in the present description, referred to as a moisture amount of 25°C to 200°C in some cases). Thereafter, the cell temperature was raised from 200°C to 350°C over 15 min, and held at 350°C for 1 hour. Moisture generated from the temperature-rise start from 200°C to the completion of the holding at 350°C was defined as a moisture amount (200°C to 350°C) measured by Karl Fischer's method (in the present description, referred to as a moisture amount of 200°C to 350°C in some cases). The total amount of the moisture amount of 25°C to 200°C and the moisture amount of 200°C to 350°C was calculated as a moisture amount (ppm) of 25°C to 350°C.

<X-ray diffractometry>

In addition to the above each measurement, the lithium titanate powder of each Example was subjected to an X-ray diffractometry by the following process. Specifically, the measuring instrument used was an X-ray diffractometer (manufactured by Rigaku Corp., RINT-TTR-III type) using a CuKa line. The measuring conditions of the X-ray diffractometry were set at: a measuring angle range ($2\theta$) of 10° to 90°, a step interval of 0.02°, a measuring time of 0.25 s/step, a line source of CuKa, a voltage of the tube of 50 kV and a current of 300 mA.

Among diffraction peaks measured, there were measured the main peak intensity of $Li_4Ti_5O_{12}$ in the PDF card 00-049-0207 of ICDD (PDF2010) (a peak intensity corresponding to a diffraction peak assigned to the (111) plane in the diffraction angle range of $2\theta$ = 18.1 to 18.5°), the main peak intensity of the anatase-type titanium dioxide in the PDF card 01-070-6826 (a peak intensity corresponding to a diffraction peak assigned to the (101) plane in the diffraction angle range of $2\theta$ = 24.7 to 25.7°), the main peak intensity of the rutile-type titanium dioxide in the PDF card 01-070-7347 (a peak intensity corresponding to a diffraction peak assigned to the (110) plane in the diffraction angle range of $2\theta$ = 27.2 to 27.6°) and the peak intensity of $Li_2TiO_3$ (a peak intensity corresponding to a diffraction peak assigned to the (-133) plane in the diffraction angle range of $2\theta$ = 43.5 to 43.8°).

Then, with the intensity of the main peak of $Li_4Ti_5O_{12}$ being taken to be 100, there were calculated relative values of the peak intensities of the anatase-type titanium dioxide, the rutile-type titanium dioxide and $Li_2TiO_3$. In the lithium titanate powders of Examples (Examples 1 to 10), the relative values of the above peak intensities were all 5 or less; thus, the lithium titanate powders were lithium titanate powders containing $Li_4Ti_5O_{12}$ as their main component.

[Evaluation of battery properties]

A coin-type battery and a laminate battery were manufactured by using the lithium titanate powder of each Example, and battery properties thereof were evaluated. The evaluation results are shown in Table 2.

<Manufacture of negative electrode sheets>

Negative electrode sheets were manufactured in a room in which the room temperature was regulate at 25°C and the dew point, at -20°C or less. The lithium titanate powder of each Example was taken out from the aluminum laminate bag in the room in which the room temperature was regulate at 25°C and the dew point, at -20°C or less. The taken-out lithium titanate powder of each Example as an active substance, an acetylene black as a conductive agent and a polyvinylidene fluoride as a binder in proportions of 90% by mass, 5% by mass and 5% by mass, respectively, were mixed as follows to thereby manufacture a coating material. The polyvinylidene fluoride and the acetylene black previously dissolved in 1-methyl-2-pyrrolidone, and a 1-methyl-2-pyrrolidone solvent were mixed in a planetary-type agitating and defoaming apparatus, and thereafter, the lithium titanate powder was added and mixed in the planetary-type agitating and defoaming apparatus while the whole solid content concentration was regulated to become 64% by mass. Thereafter, the whole solid content concentration was regulated to become 50% by mass by adding 1-methyl-2-pyrrolidone, and the resultant was mixed in the planetary-type agitating and defoaming apparatus to thereby prepare the coating material. The obtained coating material was applied and dried on an aluminum foil to thereby manufacture a negative electrode single-coated sheet to be used for a coin-type battery described later. Further, also on the opposite surface of the obtained negative electrode single-coated sheet, the coating material was applied and dried to thereby manufacture a negative electrode double-coated sheet for a laminate battery described later.

<Manufacture of a positive electrode sheet>

A positive electrode double-coated sheet was manufactured by the same process, including the ratios of an active substance, a conductive agent and a binder, as the process described in the above-mentioned <Manufacture of negative electrode sheets>, except for using a lithium cobaltate powder as the active substance.

<Preparation of an electrolytic solution>

An electrolytic solution to be used for batteries for evaluating the properties was prepared as follows. In an argon box in which the temperature was regulated at 25°C and the dew point, at -70°C or less, there was prepared a nonaqueous solvent of ethylene carbonate (EC) : propylene carbonate (PC) : methyl ethyl carbonate (MEC) : dimethyl carbonate (DMC) = 10 : 20: 20 : 50 (in volume ratio), and $LiPF_6$ and $LiPO_2F_2$ as electrolyte salts were dissolved therein so as to become 1 M and 0.05 M, respectively, to thereby prepare an electrolytic solution.

<Manufacture of coin-type batteries>

The negative electrode single-coated sheet manufactured by the above-mentioned process was punched into a circle of 14 mm in diameter, and stamped at a pressure of 2 t/cm$^2$, and thereafter vacuum dried at 120°C for 5 hours to thereby manufacture an evaluation electrode. The manufactured evaluation electrode and a metallic lithium (which had been formed into a circle of 0.5 mm in thickness and 16 mm in diameter) were opposed through a glass filter (two-layered one of GA-100, manufactured by Advantec Co., Ltd., and GF/C, manufactured by Whatman plc); and then, the nonaqueous electrolytic solution prepared by the process described in the above-mentioned <Preparation of an electrolytic solution> was added, and sealed to thereby manufacture a 2032 coin-type battery.

The electrode density of the negative electrode was calculated by determining the thickness and the mass of the mixture (negative electrode active substance (active material of the present invention)) by subtracting a thickness and a mass (circle of 14 mm in diameter, 20 μm, 8.5 mg) of the current collector, which had been measured from a thickness and a mass of the evaluation electrode. The D50 of the electrode was determined by measuring, by the same method as the method described in the above-mentioned <D50 and D$_{max}$>, a lithium titanate powder after the acetylene black (conductive agent) and the polyvinylidene fluoride (binder) had been decomposed and removed, which powder was obtained by scraping the mixture off the negative electrode single-coated sheet, and subjecting the scraped-off mixture to a heat treatment at 500°C for 3 hours. The results of the electrode density and the D50 of the electrode are shown in Table 2. The results of the ratio (D50 of the electrode/D50 of the powder (μm/μm)) of the electrode D50 to the powder D50 are also shown in the table.

<Manufacture of laminate batteries>

Laminate batteries were manufactured in a room in which the room temperature was regulate at 25°C and the dew point, at -20°C or less. The negative electrode double-coated sheet was stamped at a pressure of 2 t/cm$^2$, and thereafter punched to thereby manufacture a negative electrode having a lead wire connecting part. The positive electrode double-coated sheet was stamped at a pressure of 2 t/cm$^2$, and thereafter punched to thereby manufacture a positive electrode having a lead wire connecting part. The manufactured negative electrode and positive electrode were vacuum dried at 150°C for 12 hours. The positive electrode and the negative electrode after the vacuum drying were opposed through a separator (manufactured by Ube Industries, Ltd., UP3085), and stacked; an aluminum-foil lead wire was connected to each of the positive electrode and the negative electrode; the nonaqueous electrolytic solution was added; and the resultant was vacuum sealed with an aluminum laminate to thereby manufacture a laminate battery for evaluation. The capacity of the battery at this time was 800 mAh, and the ratio (negative electrode capacity/positive electrode capacity) of the negative electrode to the positive electrode was 1.1.

<Measurement of the negative electrode single electrode capacity>

In a thermostatic chamber at 25°C, the coin-type battery manufactured by the process described in the above-mentioned <Manufacture of coin-type batteries> was subjected to three cycles of charging and discharging each in which, with the direction of the evaluation electrode absorbing Li being charging, the coin-type battery was subjected to charging at a current density of 0.2 mA/cm$^2$ to 1 V and to a constant-current constant voltage charging at 1 V until the charging current became a current density of 0.05 mA/cm$^2$, and thereafter was subjected to a constant-current discharging at a current density of 0.2 mA/cm$^2$ to 2 V. The discharge capacity at the third cycle was taken as an initial capacity, and the single electrode capacity (mAh/g) per active substance mass and the single electrode capacity (mAh/cm$^3$) per mixture volume were determined.

<Measurement of the resistance rise rate after to before cycles, the capacity retention rate and the amount of gas generated in a cycle test>

In a thermostatic chamber at 25°C, the laminate battery manufactured by the process described in the above-mentioned <Manufacture of laminate batteries> was subjected to three cycles of charging and discharging each in which the laminate battery was subjected to a constant-current charging at a current of 0.2C to 2.75 V and thereafter to a constant-current discharging at a current of 0.2C to 1.4 V. Thereafter, the laminate battery was charged to a capacity (SOC: 50 (SOC: State of Charge)) of 50% of the discharge capacity at the third cycle; thereafter, the direct current resistance was measured and was taken as an initial resistance value of the laminate battery (hereinafter, referred to as initial resistance value in some cases). The volume of the laminate battery at this time was measured by Archimedes method, and taken as an initial volume of the laminate battery (hereinafter, referred to as initial volume in some cases).
Then, in a thermostatic chamber at 45°C, the laminate battery was one time subjected to an aging in which the laminate battery was subjected to a constant-current charging at a current of 0.2C to 2.75 V and thereafter to a constant-current discharging at a current of 0.2C to 1.4 V. The volume of the laminate battery at this time was measured by Archimedes method, and taken as an after-aging volume of the laminate battery (hereinafter, referred to as after-aging volume in some cases). The amount of gas generated in the aging (hereinafter, referred to as aging generation gas in some cases) was determined by subtracting the initial volume from the after-aging volume. The results are shown in Table 3.
Then, the laminate battery was unsealed in a dry box having a temperature of 25°C and a dew point of -70°C or less, and then vacuum sealed to thereby remove gas generated in the aging from the laminate battery. Then, the volume of the laminate battery at this time was measured by Archimedes method, and taken as a volume after aging and vacuum sealing of the laminate battery (hereinafter, referred to as volume after aging and vacuum sealing in some cases).
Then, in a thermostatic chamber at 60°C, the laminate battery was subjected to a cycle test of 700 cycles of charging and discharging each in which the laminate battery was subjected to a constant-current charging at a current of 1C to 2.75 V and thereafter to a constant-current discharging at a current of 1C to 1.4 V. The capacity retention rate (%) was calculated by dividing a discharge capacity at the 700th cycle by a discharge capacity at the first cycle. The results are shown in Table 2.
After the cycle test of 700 cycles, in a thermostatic chamber at 25°C, the laminate battery was subjected to three cycles of charging and discharging each in which the laminate battery was subjected to a constant-current charging at a current of 0.2C to 2.75 V and thereafter to a constant-current discharging at a current of 0.2C to 1.4 V. Thereafter, after the laminate battery was charged to a capacity (SOC: 50) of 50% of a discharge capacity at the third cycle, the direct current resistance was measured, and taken as an after-cycle test resistance value of the laminate battery (referred to as after-cycle test resistance value in some cases). Further the volume of the laminate battery at this time was measured by Archimedes method, and taken as an after-cycle test volume of the laminate battery (hereinafter, referred to as after-cycle test volume in some cases). Then, the resistance rise rate after to before cycle was calculated by dividing a resistance value after the cycle test by an initial resistance value. Then the amount of gas generated by the cycle test of 700 cycles (in the present description, referred to as amount of gas generated by the cycle test in some cases) was determined by subtracting a volume after aging and vacuum sealing from an after-cycle test volume.

[Example 11]

The lithium titanate powder according to Example 1 was used; and in <Manufacture of negative electrode sheets> in [Evaluation of battery properties], a porous aluminum was used as the current collector in place of the aluminum foil. The porous aluminum current collector (porosity: 91%, pore diameter: 300 $\mu$m) was immersed in a slurry prepared under the same condition as in the above, and subjected to a reduced pressure (-0.1 MPa). After the immersion, surplus slurry adhered on the front and back surfaces of the porous aluminum current collector was removed by a silicone rubber spatula; and the resultant was dried to thereby manufacture a porous aluminum current collector negative electrode. Then, in <Manufacture of coin-type batteries>, the stamping was carried out at a pressure of 0.8 t/cm$^2$ in place of a pressure of 2 t/cm$^2$. The calculation of the negative electrode density was made by subtracting only the mass (circle of 14 mm in diameter, 37 mg) of the current collector instead of subtracting the thickness and the mass (circle of 14 mm in diameter, 20 $\mu$m, 8.5 mg). Except for this, [Evaluation of battery properties] was carried out as in Example 1. The results are shown in Table 2.

<Reference Experiment Example 1>

Laminate batteries were manufactured by altering the vacuum drying condition of the negative electrode to 80° for 2 hours in the method of manufacturing laminate batteries described in <Manufacture of laminate batteries>. The manufactured laminate batteries were subjected to up to the aging by the same method as the method described in <Measurement of the resistance rise rate after to before cycles, the capacity retention rate and the amount of gas generated in a cycle test>, and the amount of gas generated in the aging (aging generation gas) was determined. The results are shown as Reference Experiment Examples 1-1 to 1-26 together with the above Examples and Comparative Examples, in which drying was carried out at 150°C for 12 hours, in Table 3.

[Table 3]

**Table 3**

| | Lithium Titanate Powder Used | 800-mAh Laminate Battery | |
| --- | --- | --- | --- |
| | | Aging Generation Gas (ml) | |
| | | Electrode Drying 80°C 2h | Electrode Drying 150°C 12h |
| Reference Experiment Example 1-1 | Example 1 | 2.0 | 1.0 |
| Reference Experiment Example 1-2 | Example 2 | 1.5 | 0.8 |
| Reference Experiment Example 1-3 | Example 3 | 1.4 | 0.7 |
| Reference Experiment Example 1-4 | Example 4 | 1.7 | 0.9 |
| Reference Experiment Example 1-5 | Example 5 | 2.9 | 1.2 |
| Reference Experiment Example 1-6 | Example 6 | 1.9 | 0.9 |

(continued)

| | Lithium Titanate Powder Used | 800-mAh Laminate Battery | |
| --- | --- | --- | --- |
| | | Aging Generation Gas (ml) | |
| | | Electrode Drying 80°C 2h | Electrode Drying 150°C 12h |
| Reference Experiment Example 1-7 | Example 7 | 3.2 | 1.2 |
| Reference Experiment Example 1-8 | Example 8 | 2.0 | 1.1 |
| Reference Experiment Example 1-9 | Example 9 | 2.9 | 0.9 |
| Reference Experiment Example 1-10 | Example 10 | 3.1 | 1.1 |
| Reference Experiment Example 1-11 | Comparative Example 1 | 1.9 | 0.9 |
| Reference Experiment Example 1-12 | Comparative Example 2 | 2.0 | 1.0 |
| Reference Experiment Example 1-13 | Comparative Example 3 | 1.8 | 0.8 |
| Reference Experiment Example 1-14 | Comparative Example 4 | 2.0 | 1.0 |
| Reference Experiment Example 1-15 | Comparative Example 5 | 2.1 | 1.1 |
| Reference Experiment Example 1-16 | Comparative Example 6 | 2.3 | 1.1 |
| Reference Experiment Example 1-17 | Comparative Example 7 | 12.5 | 2.1 |
| Reference Experiment Example 1-18 | Comparative Example 8 | 2.0 | 1.0 |
| Reference Experiment Example 1-19 | Comparative Example 9 | 2.1 | 1.1 |
| Reference Experiment Example 1-20 | Comparative Example 10 | 3.2 | 1.2 |
| Reference Experiment Example 1-21 | Comparative Example 11 | 3.0 | 1.6 |
| Reference Experiment Example 1-22 | Comparative Example 12 | 12.0 | 2.0 |
| Reference Experiment Example 1-23 | Comparative Example 13 | 12.4 | 2.3 |
| Reference Experiment Example 1-24 | Comparative Example 14 | 12.3 | 2.1 |
| Reference Experiment Example 1-25 | Comparative Example 15 | 2.0 | 1.1 |
| Reference Experiment Example 1-26 | Comparative Example 16 | 2.4 | 1.2 |

Then, Fig. 1 shows relations between the amounts of gas generated in the aging of the laminate batteries manufactured by altering the vacuum drying condition of the negative electrode to 80° for 2 hours, and the moisture amounts of 25°C to 200°C and the moisture amounts of 200°C to 350°C measured for the lithium titanate powders. Further, Fig. 2 shows relations between the amounts of gas generated in the aging of the laminate batteries manufactured by making the vacuum drying condition of the negative electrode to be 150° for 12 hours, and the moisture amounts of 25°C to 200°C and the moisture amounts of 200°C to 350°C measured for the lithium titanate powders.

From Fig. 1, it is clear that the amount of gas generated in the aging had a large correlation with the moisture amount of 25°C to 200°C (that is, it is clear that in Comparative Examples 7 and 12 to 14 (Reference Experiment Examples 1-17 and 1-22 to 1-24), in which the moisture amount of 25°C to 200°C was large, the amount of gas generated in the aging was large); and from Fig. 2, it is clear that the vacuum drying of the electrode at 150°C for 12 hours removed almost all moisture amount of 25°C to 200°C.

<Reference Experiment Example 2>

The lithium titanate powder of Example 1 was taken out from the aluminum laminate bag, and stored in a thermohygrostatic chamber under the conditions (temperature, humidity, time) indicated in Table 4; and thereafter, the moisture amount was measured by the same method as the method described in <Measurement of the moisture amount by Karl Fischer's method>. Laminate batteries were manufactured by using the lithium titanate powders stored under the each condition and by the same method as the method described in <Manufacture of laminate batteries>. For the manufactured laminate batteries, evaluation of the battery properties was carried out by the same method as the method described in <Measurement of the resistance rise rate after to before cycles, the capacity retention rate and the amount of gas generated in a cycle test>. The results for the above are shown as Reference Experiment Examples 2-1 to 2-5 together with Example 1, in Table 4.

[Table 4]

**Table 4**

| | Water Absorption Test | | | Powder Properties | | | 800-mAh Laminate Battery | | |
|---|---|---|---|---|---|---|---|---|---|
| | Temperature | Humidity | Time | Moisture Amount (ppm) | | | Resistance Rise Rate after to before Cycle | Capacity Retention Rate (%) | Cycle Test Gas Generation Amount (ml) |
| | °C | % | h | 25 to 200°C | 200 to 350°C | Total Amount | | | |
| Reference Experiment Example 2-1 | 25 | 40 | 1 | 433 | 30 | 463 | 1.46 | 95 | 0.7 |
| Reference Experiment Example 2-2 | | | 6 | 533 | 93 | 626 | 1.51 | 93 | 0.8 |
| Reference Experiment Example 2-3 | | | 24 | 738 | 544 | 1282 | 3.83 | 74 | 3.5 |
| Reference Experiment Example 2-4 | | | 48 | 963 | 651 | 1614 | 4.99 | 71 | 4.3 |
| Reference Experiment Example 2-5 | | | 72 | 1307 | 712 | 2019 | 5.44 | 67 | 5.5 |
| Example 1 | - | - | 0 | 287 | 10 | 297 | 1.43 | 96 | 0.6 |

From the results, it is clear that in the case where the lithium titanate powder was exposed to a usual indoor environment, like a temperature of 25°C and a humidity of 40%, the moisture amount gradually rose, and as a results, not only there rose the amount of gas generated in the high-temperature charge and discharge cycle test, but also there worsened the capacity retention rate and the resistance rise rate after to before cycle.

## Claims

1. A lithium titanate powder for an electrode of an energy storage device, comprising $Li_4Ti_5O_{12}$ as a main component, wherein the lithium titanate powder comprises secondary particles being aggregates of primary particles composed of lithium titanate; and
the lithium titanate powder has: a $D_{BET}$ of 0.03 $\mu$m or more and 0.6 $\mu$m or less and a D50 of 3 $\mu$m or more and 40 $\mu$m or less where the $D_{BET}$ represents a specific surface area-equivalent diameter calculated from a specific surface area determined by a BET method, and the D50 represents a median particle diameter in volume;
a ratio $D50/D_{BET}$ ($\mu$m/$\mu$m) of D50 to $D_{BET}$ of 20 or more and 350 or less;
a moisture amount (25°C to 350°C) of 600 ppm or less as measured by Karl Fischer's method; and
an average 10%-compressive strength of the secondary particles of 0.1 MPa or more and 3 MPa or less.

2. The lithium titanate powder for an electrode of an energy storage device according to claim 1, wherein the lithium titanate powder has no detected compressive breaking strength.

3. The lithium titanate powder for an electrode of an energy storage device according to claim 1 or 2, wherein the lithium titanate powder has a moisture amount (200°C to 350°C) of 150 ppm or less as measured by Karl Fischer's method.

4. The lithium titanate powder for an electrode of an energy storage device according to any one of claims 1 to 3, wherein the lithium titanate powder has a Dmax of 53 $\mu$m or less where the $D_{max}$ represents a maximum particle diameter in volume.

5. The lithium titanate powder for an electrode of an energy storage device according to any one of claims 1 to 4, wherein the secondary particles have an average degree of circularity of 90% or more.

6. The lithium titanate powder for an electrode of an energy storage device according to any one of claims 1 to 5, wherein the secondary particles have an average 10%-compressive strength of 0.1 MPa or more and 1 MPa or less.

7. An active material, comprising the lithium titanate powder for an electrode of an energy storage device according to any one of claims 1 to 6.

8. An electrode sheet for an energy storage device, manufactured by using the active material according to claim 7.

9. An energy storage device, comprising the electrode sheet according to claim 8.

10. A lithium ion secondary battery, manufactured by using the active material according to claim 7.

11. A hybrid capacitor, manufactured by using the active material according to claim 7.

12. The energy storage device according to claim 9, wherein a nonaqueous electrolytic solution where an electrolyte salt including at least one lithium salt selected from $LiPF_6$, $LiBF_4$, $LiPO_2F_2$ and $LiN(SO_2F)_2$ is dissolved in a nonaqueous solvent including one or more cyclic carbonates selected from ethylene carbonate, propylene carbonate, 1,2-butylene carbonate, 2,3-butylene carbonate, 4-fluoro-1,3-dioxolan-2-one and 4-ethynyl-1,3-dioxolan-2-one is used.

13. The energy storage device according to claim 12, wherein the nonaqueous electrolytic solution has a total concentration of the electrolyte salt of 0.5 M or more and 2.0 M or less, and includes at least $LiPF_6$ as the electrolyte salt, and further includes at least one selected from $LiBF_4$, $LiPO_2F_2$ and $LiN(SO_2F)_2$ within a range of 0.001 M or more and 1.0 M or less.

14. The energy storage device according to claim 12 or 13, wherein the nonaqueous electrolytic solution further includes one or two or more symmetric chain carbonates selected from dimethyl carbonate, diethyl carbonate, dipropyl carbonate and dibutyl carbonate, and one or two or more asymmetric carbonates selected from methyl ethyl carbonate, methyl propyl carbonate, methyl isopropyl carbonate, methyl butyl carbonate and ethyl propyl carbonate.

Fig. 1

Fig. 2

## INTERNATIONAL SEARCH REPORT

| International application No. |
| --- |
| PCT/JP2017/023986 |

A. CLASSIFICATION OF SUBJECT MATTER
*H01M4/485*(2010.01)i, *C01G23/00*(2006.01)i, *H01G11/06*(2013.01)i, *H01G11/50* (2013.01)i, *H01M10/0525*(2010.01)i, *H01M10/0568*(2010.01)i, *H01M10/0569* (2010.01)i

According to International Patent Classification (IPC) or to both national classification and IPC

B. FIELDS SEARCHED

Minimum documentation searched (classification system followed by classification symbols)
H01M4/485, C01G23/00, H01G11/06, H01G11/50, H01M10/0525, H01M10/0568, H01M10/0569

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-6816 A (Hitachi, Ltd.), 12 January 2012 (12.01.2012), claims; paragraphs [0021] to [0041], [0048] to [0071]; example 2 (Family: none) | 1-14 |
| A | JP 2002-289194 A (Toho Titanium Co., Ltd.), 04 October 2002 (04.10.2002), claims; paragraphs [0007] to [0017]; examples 1 to 5 (Family: none) | 1-14 |

[X] Further documents are listed in the continuation of Box C.　　[ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 August 2017 (10.08.17) | 22 August 2017 (22.08.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

33

**INTERNATIONAL SEARCH REPORT**

International application No.

PCT/JP2017/023986

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-018778 A  (Toshiba Corp.),<br>26 January 2012 (26.01.2012),<br>paragraph [0028]<br>& US 2012/0009449 A1<br>paragraph [0037]<br>& CN 102315435 A          & KR 10-2012-0004339 A | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014001110 A
- JP 2001192208 A
- WO 2014196462 A
- JP 2001080920 A
- JP 2015088467 A
- JP 2013020909 A